(19) Europäisches Patentamt / European Patent Office / Office européen des brevets

(11) **EP 4 757 193 A1**

(12) **EUROPEAN PATENT APPLICATION**

(43) Date of publication:
**10.06.2026 Bulletin 2026/24**

(21) Application number: 25221728.6

(22) Date of filing: **09.12.2025**

(51) International Patent Classification (IPC):
**H04B 7/024** (2017.01)   **H04B 7/06** (2006.01)
**H04J 11/00** (2006.01)

(52) Cooperative Patent Classification (CPC):
**H04B 7/024; H04B 7/0619; H04J 11/0056**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.12.2024 US 202463729506 P**

(71) Applicant: **Comcast Cable Communications, LLC
Philadelphia, PA 19103 (US)**

(72) Inventors:
• **LANANTE, Leonardo Alisasis
  Philadelphia, 19103 (US)**

• **KIM, Jeongki
  Philadelphia, 19103 (US)**
• **DINAN, Esmael Hejazi
  Philadelphia, 19103 (US)**
• **ERKUCUK, Serhat
  Philadelphia, 19103 (US)**
• **BAYKAS, Tuncer
  Philadelphia, 19103 (US)**
• **ZHANG, Jiayi
  Philadelphia, 19103 (US)**
• **PEREZ-RAMIREZ, Javier
  Philadelphia, 19103 (US)**

(74) Representative: **V.O.
P.O. Box 87930
2508 DH Den Haag (NL)**

(54) **FEEDBACK STATUS FOR COORDINATED SOUNDING**

(57)    Multiple access points may communicate with multiple wireless devices, such as stations. Channel information between an access point and a station may indicate an ability of the access point to participate in a coordinated beamforming procedure with one or more other access points. A coordinated beamforming transmission by access points may be initiated based on a reception status associated with the channel information.

FIG. 19

**Description**

## CROSS REFERENCE RELATED TO OTHER APPLICATIONS

This application claims the benefit of U.S. Provisional Application No. 63/729,506, filed on December 9, 2024. The above referenced application is hereby incorporated by reference in its entirety.

## BACKGROUND

Multiple access points communicate with multiple wireless devices, such as stations. Coordinated beamforming is used to estimate channel conditions for such communications.

## SUMMARY

The following summary presents a simplified summary of certain features. The summary is not an extensive overview and is not intended to identify key or critical elements.

Multiple access points may communicate with multiple wireless devices, such as stations. Coordinated beamforming procedures may be used by an access point by communicating with other access points using sounding procedures. The access point may receive channel information between another access point and a station. The access point may further receive a reception status associated with the channel information. Based on the reception status, the access point may perform one or more operations. Coordinated beamforming may be initiated by the access point, for example, if the reception status indicates a success. Coordinated beamforming may not be (initially) initiated by the access point, for example, if reception status indicates a failure; instead, the access point may perform one or more other operations such as reinitiating a channel sounding phase, relaying null data (e.g., a null data physical layer protocol data unit) feedback to another access point, and/or triggering a station to retransmit null data feedback. By performing coordinated beamforming procedures described herein, advantages may be achieved such as improved throughput and/or resource utilization efficiency.

These and other features and advantages are described in greater detail below.

## BRIEF DESCRIPTION OF THE DRAWINGS

Examples of several of the various embodiments of the present disclosure are described herein with reference to the drawings.

FIG. 1 shows example wireless communication networks.

FIG. 2 shows example devices in a communication network.

FIG. 3 shows an example of a multi-AP network.

FIG. 4 shows an example of Enhanced Distributed Channel Access (EDCA) and Coordinated Orthogonal Frequency Division Multiple Access (COFDMA).

FIG. 5 shows an example network that comprises a coordinated AP set.

FIG. 6 shows an example multi-AP operation procedure.

FIG. 7 shows an example multi-AP sounding phase.

FIG. 8 shows an example extremely high throughput (EHT) sounding null data PPDU (NDP).

FIG. 9 shows an example null data PPDU (NDP) announcement (NDPA) frame format.

FIG. 10 shows an example control frame which may be used as a trigger frame.

FIG. 11 shows an example EHT compressed beamforming/channel quality indication (CQI) frame.

FIG. 12 shows an example of a trigger based (TB) sounding sequence.

FIG. 13 shows an example management frame which may be used as an action frame.

FIG. 14 shows an example of sequential NDP sounding.

FIG. 15 shows an example of joint NDP sounding.

FIG. 16 shows an example multi-AP downlink data transmission phase.

FIG. 17 shows an example multi-AP uplink data transmission phase.

FIG. 18 shows a problem that may arise in at least some NDP sounding procedures.

FIG. 19 shows an example of a coordinated beamforming procedure.

FIG. 20 shows an example of another coordinated beamforming procedure.

FIG. 21 shows an example of another coordinated beamforming procedure.

FIG. 22 shows an example of another coordinated beamforming procedure.

FIG. 23 shows an example of another coordinated beamforming procedure.

FIG. 24 shows an example process of a coordinated beamforming procedure.

FIG. 25 shows another example process of a coordinated beamforming procedure.

FIG. 26 shows another example process of a coordinated beamforming procedure.

FIG. 27 shows another process of a coordinated beamforming procedure.

FIG. 28 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

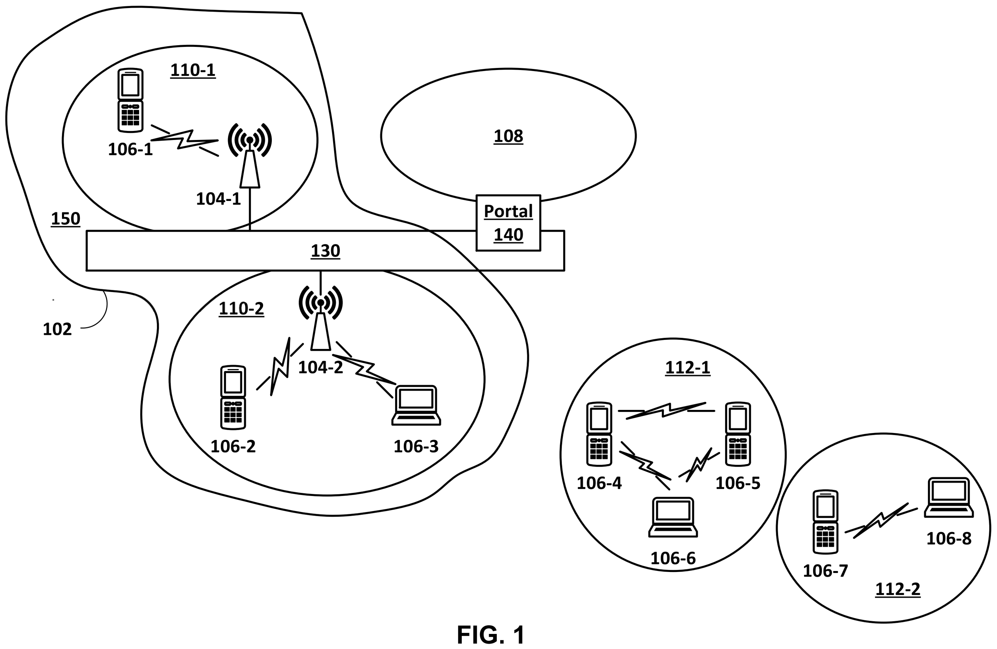

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.1 1ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

A frequency band may include one or more subbands or frequency channels. For example, PPDUs conforming to the IEEE 802.11n, 802.11ac, 802.11ax and/or 802.11be standard amendments may be transmitted over the 2.4 GHz, 5 GHz, and/or 6 GHz bands, each of which may be divided into multiple 20 MHz channels. The PPDUs may be transmitted over a physical channel having a minimum bandwidth of 20 MHz. For example, PPDUs may be transmitted over physical channels having bandwidths of 40 MHz, 80 MHz, 160 MHz, or 520 MHz by bonding together multiple 20 MHz channels.

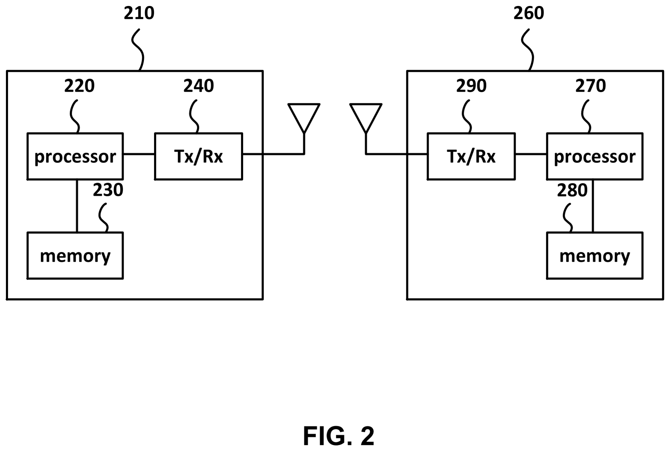

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3rd generation partnership project (3GPP) protocol, etc.). The processors (e.g., processors 220, 270) may operate as a PHY layer and/or MAC layer. The processors may be operatively connected to the memory 230/280 and/or to the transceiver 240/290, respectively. The communication devices 210 and/or 260 may be a multi-link device (MLD), that is a device capable of operating over multiple links (e.g., as defined by the IEEE 802.11 standard). A MLD implements multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations/ discussed in the present application.

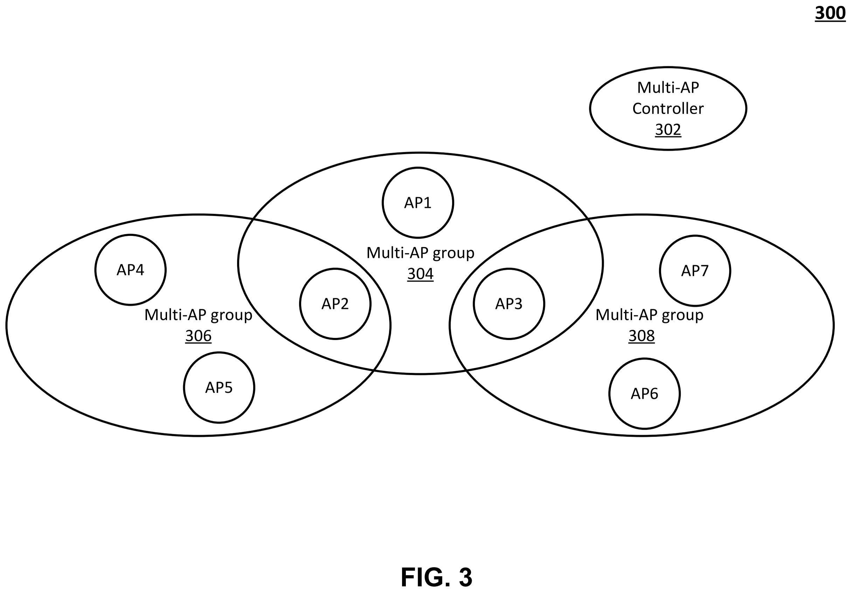

FIG. 3 shows an example multi-AP network 300. Example multi-AP network 300 may be a multi-AP network in accordance with one or more standards, such as a Wi-Fi Alliance standard specification for multi-AP networks and/or any other standard relating to communication with multiple access points. As shown in FIG. 3, multi-AP network 300 may comprise a multi-AP controller 302 and a plurality of multi-AP groups (or multi-AP sets) 304, 306, and 308.

The multi-AP controller 302 may be a logical entity that implements logic for controlling the APs in multi-AP network 300. Multi-AP controller 302 may receive capability information and measurements from the APs and may trigger AP control commands and operations on the APs. Multi-AP controller 302 may also provide onboarding functionality to onboard and provision APs onto multi-AP network 300.

Multi-AP groups 304, 306, and 308 may each comprise a plurality of APs. APs in a multi-AP group may be in communication range of each other and may coordinate their transmissions and/or transmissions from their associated STAs. Coordinated transmissions may involve all or a subset of the APs in a multi-AP group. A multi-AP group may be referred to as an AP candidate set (e.g., APs in a multi-AP group may be considered candidates for a coordinated transmission initiated by an AP). The APs in a multi-AP group may not be required to have the same primary channel. As used herein, the primary channel for an AP may refer to a default channel that the AP monitors for management frames and/or uses to send beacon frames. For a STA associated with an AP, the primary channel may refer to the primary channel of the AP, which may be advertised through the AP's beacon frames.

A multi-AP group may be established by a coordinator AP in a multi-AP setup phase prior to any multi-AP coordination. APs of the multi-AP group, other than the coordinator AP, may be referred to as the coordinated APs. A coordinator AP may establish one or more multi-AP groups. A coordinated AP may likewise be a member of multiple multi-AP groups. A coordinator AP of a multi-AP group may be a coordinated AP of another multi-AP group, and vice versa. A multi-AP group may be established by a network administrator manually by configuring APs as part of the multi-AP group. A multi-AP group may be established in a distributed manner by APs without a central controller. An AP may advertise its multi-AP capability in a beacon or other management frame (e.g., public action frame), in this case. Other APs that receive the frame with the multi-AP capability information may perform a multi-AP setup with the AP that advertised the multi-AP capability.

One of the APs in a multi-AP group may be designated as a master AP. The designation of the master AP may be done by an AP controller 302 or by the APs of the multi-AP group. The master AP of a multi-AP group may be fixed or may change over time between the APs of the multi-AP group. An AP that is not the master AP of the multi-AP group is known as a slave AP.

APs in a multi-AP group may perform coordinated transmissions together. An aspect of coordination may comprise coordinated transmissions within the multi-AP group. As used herein, a coordinated transmission, also referred to as a multi-AP transmission, may comprise a transmission event in which multiple APs (of a multi-AP group or a multi-AP network) send (e.g., transmit) in a coordinated manner over a time period. Coordinated transmissions may involve simultaneous transmissions of a plurality of APs in a multi-AP group. The time period of simultaneous AP transmission may be a continuous period. The multi-AP transmission may use different transmission techniques, such as Coordinated OFDMA (COFDMA), Coordinated Spatial Reuse (CSR), Joint Transmission or Reception (JT/JR), Coordinated Beamforming (CBF), and CTDMA, or a combination of two or more of the aforementioned or other techniques.

Multi-AP transmissions may be enabled by the AP controller and/or by the master AP of the multi-AP group. The AP controller and/or the master AP may control time and/or frequency sharing in a transmission opportunity (TXOP). If one of the APs (e.g., the master AP) in the multi-AP group obtains a TXOP, for example, the AP controller and/or the master AP may control how time/frequency resources of the TXOP are to be shared with other APs of the multi-AP group. The AP of the multi-AP group that obtains a TXOP becomes the master AP of the multi-AP group. The master AP may then share a portion of its obtained TXOP (which may be the entire TXOP) with one or more other APs of the multi-AP group.

Different multi-AP transmission schemes may be suitable for different use cases in terms of privacy protection, including whether sent data may be shared with other BSSs in the multi-AP group. Some multi-AP transmission schemes, such as CSR, CDTMA, coordinated frequency division multiple access (CFDMA), COFDMA, and CBF, enable a master AP to coordinate slave APs by sharing control information among APs, without requiring the sharing of user data among APs. The control information may comprise BSS information of APs, link quality information of channels between each AP and its associated STAs, and information related to resources to be used to achieve multiplexing in power, time, frequency, or special domains for multi-AP transmission. The control information exchanged among a master AP and slave APs may be used for interference avoidance or nulling to avoid or null co-channel interference introduced to neighboring BSSs in a multi-AP network. Interference avoidance or interference nulling requires that data transmissions between an AP and STAs are only within the same BSS. In other words, each AP sends or receives data frames to or from its associated STAs, while each STA receives or sends data frames to or from its associating AP.

By contrast, other multi-AP transmission schemes may enable a master AP to coordinate slave APs by sharing both control information and user data among APs in a multi-AP group. Control information may comprise BSS information related to APs and link quality information of channels between each AP and its associated STAs. By having user data exchanged over backhaul, the master AP and slave APs may perform data transmissions jointly to achieve spatial diversity (e.g., using distributed MIMO, for example, joint transmission (JT) for downlink transmissions and joint reception (JR) for uplink transmissions). The data transmissions between APs and STAs may comprise transmissions within the same BSS and/or across different BSSs. In other words, an AP may send (e.g., transmit) and/or receive data frames to and/or from its associated STAs as well STAs associated with other APs participating in multi-AP transmission. Similarly, a STA may send (e.g., transmit) and/or receive data frames to and/or from multiple APs.

Different multi-AP transmission schemes may be suitable for different use cases in terms of signal reception levels at STAs or APs within a multi-AP group. CBF and JT/JR, for example, require that each STA involved in a multi-AP transmission be located within a common area of signal coverage of the APs involved in the multi-AP transmission. Generally, CBF may be suitable when a receiving STA suffers from potential interference from other APs in the multi-AP group. By using channel related information such as channel state information (CSI), channel quality indication (CQI), or compressed beamforming (BF) feedback exchanged among APs, an AP may pre-code a signal to be sent (e.g., transmitted) to form a beam that increases power toward a target STA while reducing the power that interferes with a STA associated with a neighboring AP. Use cases of JT/JR may require a sufficient received signal power at receiving STAs for JT and a sufficient received signal power at receiving APs for JR. By contrast, CSR may perform multi-AP transmission in an interference coordination manner. The received signal power at a STA associated with an AP sending (e.g., transmitting) data may be required to be much higher than the received interference power.

Different multi-AP transmission schemes may require different synchronization levels and may operate with or without a backhaul between a master AP and slave APs in a multi-AP group. CSR may require PPDU-level synchronization, whereas CBF may require symbol-level synchronization. On the other hand, JT/JR may require tight time/frequency/phase-level synchronization as well as a backhaul for data sharing between APs in the multi-AP group.

Different multi-AP transmission schemes may have different complexity levels with regard to coordination between a master AP and slave APs in a multi-AP group. JT/JR may require very high complexity due to both CSI and user data being shared between APs. CBF may require medium complexity due to the sharing of CSI. CFDMA, COFDMA and CTDMA may require medium or relatively low complexity due to the CSI and time-/frequency resources to be shared between APs. CSR may require low complexity as the amount of information related to spatial reuse and traffic that needs to be exchanged between APs may be low.

A multi-AP group may adopt a static multi-AP operation including a static multi-AP transmission scheme. A multi-AP network may also be dynamic due to various reasons. A STA may join or leave the multi-AP network, a STA may switch to a power save mode, or an AP or a STA may change its location. Such changes may lead to changes in the conditions underlying the selection of the multi-AP transmission scheme and may cause certain requirements (e.g., synchronization, backhaul, coordination, etc.) for the multi-AP transmission scheme to be lost. This may result in an inferior quality of transmissions in the multi-AP network.

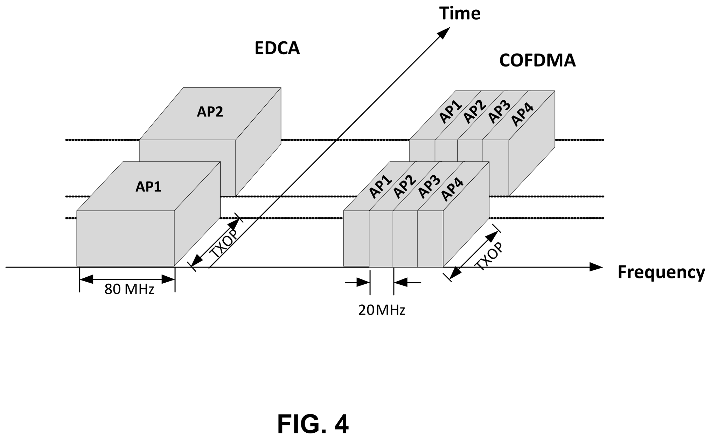

A master AP may share a portion of its TXOP with multiple APs by assigning each of the multiple APs a respective frequency resource (e.g., channel/subchannel) of available frequency resources, for example, such in COFDMA. COFDMA is shown in FIG. 4 as a multi-AP channel access, compared with Enhanced Distributed Channel Access (EDCA). As shown in FIG. 4, in EDCA, channel access by multiple APs (e.g., AP1, AP2) may occur in consecutive time periods (e.g., TXOPs). During a given channel access, the channel (e.g., 80 MHz) in its entirety may be used by a single AP. In contrast, in COFDMA, access by multiple APs (multi-AP channel access) may take place in a same time period (e.g., same TXOP or same portion of a TXOP) over orthogonal frequency resources. As shown in FIG. 4, an 80 MHz channel may be divided into four non-overlapping 20 MHz channels, each assigned to a respective AP of the multiple APs. The multiple APs may send (e.g., transmit) in a coordinated manner, simultaneously in the same time period, to achieve a multi-AP transmission. In the multi-AP transmission, each of the multiple APs may send (e.g., transmit) a PPDU to one or more STAs.

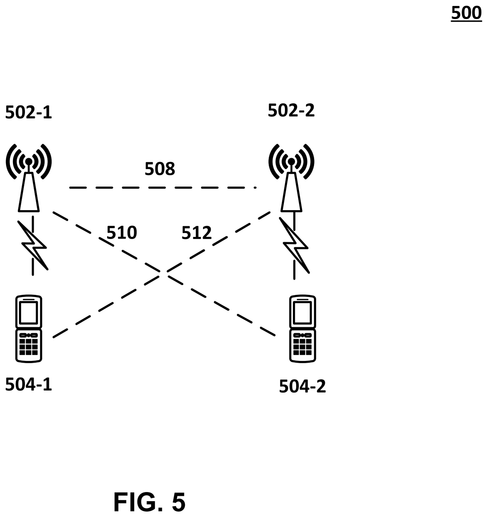

FIG. 5 shows an example network 500 that comprises a coordinated AP set. As shown in FIG. 5, the coordinated AP set may be comprised of two APs - AP 502-1 and AP 502-2. The coordinated AP set may be a subset of an established multi-AP group. At least one STA may be associated with each of APs 502-1 and 502-2. A STA 504-1 may be associated with AP 502-1, and a STA 504-2 may be associated with AP 502-2.

As described herein in FIG. 1, APs 502-1 and 502-2 may belong to the same ESS. In such a case, APs 502-1 and 502-2 may be connected by a DS to support ESS features. In addition, as part of a coordinated AP set, APs 502-1 and 502-2 may be connected by a backhaul. The backhaul is used to share information quickly between APs to support coordinated transmissions. The shared information may be channel state information or data to be sent (e.g., transmitted) to associated STAs. The backhaul may be a wired backhaul or a wireless backhaul. A wired backhaul is preferred for high-capacity information transfer without burdening the main radios of the APs. However, a wired backhaul may require a higher deployment cost and may place greater constraints on AP placement. A wireless backhaul is preferred for its lower deployment cost and flexibility regarding AP placement. However, because a wireless backhaul relies on the main radios of the APs to transfer information, the APs cannot transmit or receive any data while the wireless backhaul is being used.

Typically, one of APs 502-1 and 502-2 may act as a Master AP and the other as a Slave AP. The Master AP is the AP that is the owner of the TXOP. The Master AP may share frequency resources during the TXOP with the Slave AP. If/when there are more than two APs in the coordinated set, a Master AP may share its TXOP with only a subset of the coordinated AP set. The role of the Master AP may change over time. The Master AP role may be assigned to a specific AP for a duration of time. Similarly, the Slave AP role may be chosen by the Master AP dynamically or can be pre-assigned for a duration of time.

The APs may only do certain types of coordinated transmissions, for example, depending on the capability of APs in a coordinated AP set. In FIG. 5, if AP 502-1 supports JT and CSR while AP 502-2 supports CSR and CBF, for example, both APs may only perform CSR as a coordinated transmission scheme. An AP may also prefer to perform single AP transmissions for a duration of time if the benefit of coordinated transmission does not outweigh some disadvantages with coordinated transmission such as reduced flexibility and increased computational power required.

CSR is one type of multi-AP coordination that may be supported by AP 502-1 and AP 502-2 as shown in FIG. 5. Spatial reuse using CSR can be more stable than non-AP coordinated spatial reuse schemes such as OBSS PD-based SR and PSR-based SR. In example 500, APs 502-1 and 502-2 may perform a joint sounding operation in order to measure path loss (PL) on paths of network 500. The joint sounding operation may result in the measurement of PL 508 for the path between APs 502-1 and 502-2, path loss 510 for the path between AP 502-1 and STA 504-2, and path loss 512 for the path between AP 502-2 and STA 504-1. The measured path loss information may then be shared between APs 502-1 and 502-2 (e.g., using the backhaul) to allow for simultaneous transmissions by APs 502-1 and 502-2 to their associated STAs 504-1 and 504-2 respectively. Specifically, if/when APs 502-1 and/or 502-2 obtains a TXOP to become the Master AP. The Master AP may then send a CSR announcement frame to the other AP(s). The Master AP may perform a polling operation, before sending the CSR announcement frame, to poll Slave APs regarding packet availability for transmission. If at least one Slave AP responds indicating packet availability, the Master AP may proceed with sending the CSR announcement frame. In the CSR announcement, the Master AP may limit the transmit power of a Slave AP in order to protect its own transmission to its target STA. The Slave AP may similarly protect its own transmission to its target STA by choosing a modulation scheme that enables a high enough Signal to Interference Ratio (SIR) margin to support the interference due to the transmission of the Master AP to its target STA.

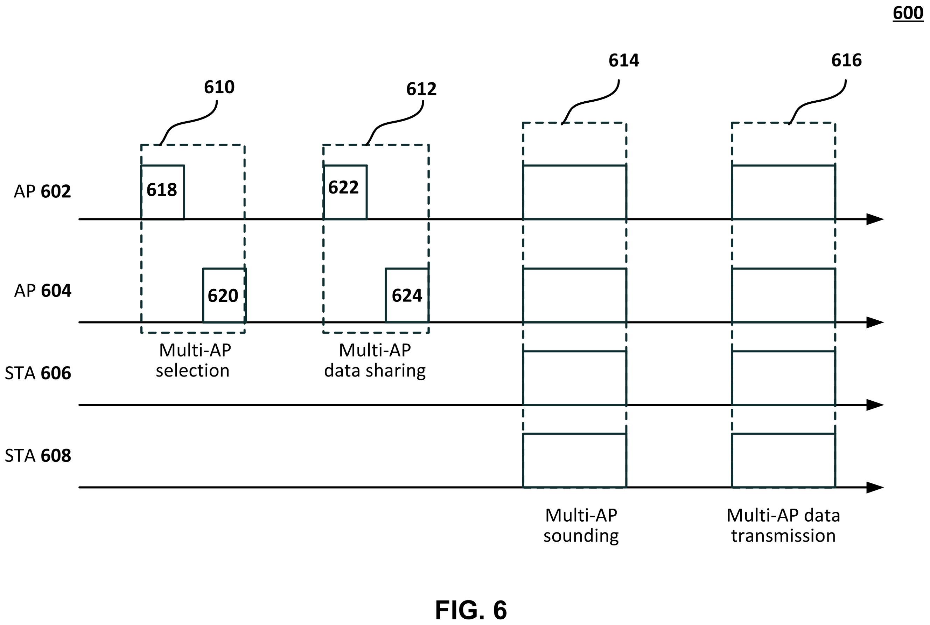

FIG. 6 shows an example 600 of a multi-AP operation procedure. In example 600, the multi-AP operation procedure is shown with respect to a multi-AP network that comprises APs 602 and 604 and STAs 606 and 608. APs 602 and 604 may form a multi-AP group. AP 602 may be the master AP and AP 604 may be a slave AP of the multi-AP group. AP 602 may obtain a TXOP making it the master AP of the multi-AP group. Alternatively, AP 602 may be designated as the master AP by a multi-AP controller.

As shown in FIG. 6, the multi-AP operation procedure may comprise a series of phases in time, each of which may contain a plurality of frame exchanges within the multi-AP network. Specifically, the multi-AP operation procedure may be comprised of a multi-AP selection phase 610, a multi-AP data sharing phase 612, a multi-AP sounding phase 614, and/or a multi-AP data transmission phase 616.

A multi-AP network may carry out a multi-AP operation based on a specific multi-AP transmission scheme. The multi-AP transmission scheme may be chosen by the master AP based on the capabilities of the slave APs in a multi-AP group. Prior to a multi-AP operation, a slave AP may inform the master AP of capability information related to the slave AP, including the capabilities of supporting one or more multi-AP transmission schemes. The slave AP may also inform the master AP of BSS information of the BSS of the slave AP and of link quality information for STAs associated with the slave AP. The master AP may receive information related to all available slave APs. The information related to slave APs may comprise capability information, BSS information, and link quality information. The master AP may determine during a multi-AP selection phase the slave APs to be designated for a multi-AP transmission and a specific multi-AP transmission scheme to be used during the multi-AP transmission, based on the information provided by available slave APs.

The multi-AP selection phase 610 may be comprised of procedures for soliciting, selecting, and/or designating slave AP(s) for a multi-AP group by a master AP. As seen in FIG. 6, the multi-AP selection phase may comprise transmissions of frame 618 from AP 602 and frame 620 from AP 604. AP 602 may send (e.g., transmit) frame 618 to solicit information regarding the buffer status of AP 604. AP 604 may send (e.g., transmit) frame 620 to inform AP 602 of its and its associated STAs buffer status and/or whether it intends to join multi-AP operation. Multi-AP selection phase 610 may also be used to exchange information related to multi-AP operation, including BSS information of APs and link quality information between each AP and its associated STAs, for example. The BSS information of an AP may be comprised of a BSS ID of the BSS of the AP, identifiers and/or capabilities of STAs belonging to the BSS, information regarding sounding capabilities of the STAs, information regarding MIMO capabilities of the AP, etc. Link quality information may comprise received signal strength indicator (RSSI), signal-to-noise ratio (SNR), signal-to-interference-plus-noise-ratio (SINR), channel state information (CSI), channel quality indicator (CQI).

The multi-AP data sharing phase 612 may be comprised of procedures for sharing data frames to be sent by APs to associated STAs among the master AP and selected slave AP(s) via direct connections between APs. Phase 612 may be optional for some multi-AP data transmission schemes. Phase 612 may be required for JT/JR as data frames may be exchanged between APs before or after multi-AP data transmission phase 616.

The multi-AP data sharing phase 612 may be performed using a wired backhaul, an in-channel wireless backhaul, or an off-channel wireless backhaul. In some cases, multi-AP data sharing phase 612 may be performed over an in-channel backhaul (e.g., using the same wireless channel used to send/receive data to/from STAs). As shown in FIG. 6, in phase 612, AP 602 may send (e.g., transmit) a frame 622, which may be received by AP 604. Frame 622 may comprise MPDUs that AP 602 wishes to send (e.g., transmit) to associated STAs using a multi-AP operation. Similarly, AP 604 may send (e.g., transmit) a frame 624, which may be received by AP 602. Frame 624 may comprise MPDUs that AP 604 wishes to send (e.g., transmit) to associated STAs using a multi-AP operation.

The multi-AP sounding phase 614 may be comprised of procedures for multi-AP channel sounding, including channel estimation and feedback of channel estimates among the master AP, candidate slave AP(s), and associated STAs. Phase 614 may be optional for some multi-AP transmission schemes, such as COFDMA, CDTMA, and CSR. Phase 614 may be performed by the master AP to aid in resource unit allocation when orchestrating a COFDMA transmission.

The multi-AP data transmission phase 616 may comprise exchange of data frames between the master AP, slave AP(s), and their associated STAs based on multi-AP transmission scheme(s) determined by the master AP. Depending on the multi-AP transmission scheme(s) to be used, phase 616 may be comprised of optional synchronization between APs of the multi-AP group, before exchange of data frames between APs and STAs within the multi-AP group.

The order of phases 610, 612, 614 and 616 may be different than shown in FIG. 6. In COFDMA, phase 616 may occur immediately after phase 610, whereas, in JT/JR, phase 612 may occur after phase 610. Further, as mentioned herein, some phases may be optional and may or may not be present. Phase 614 may not be required for COFDMA but may be required for JT/JR.

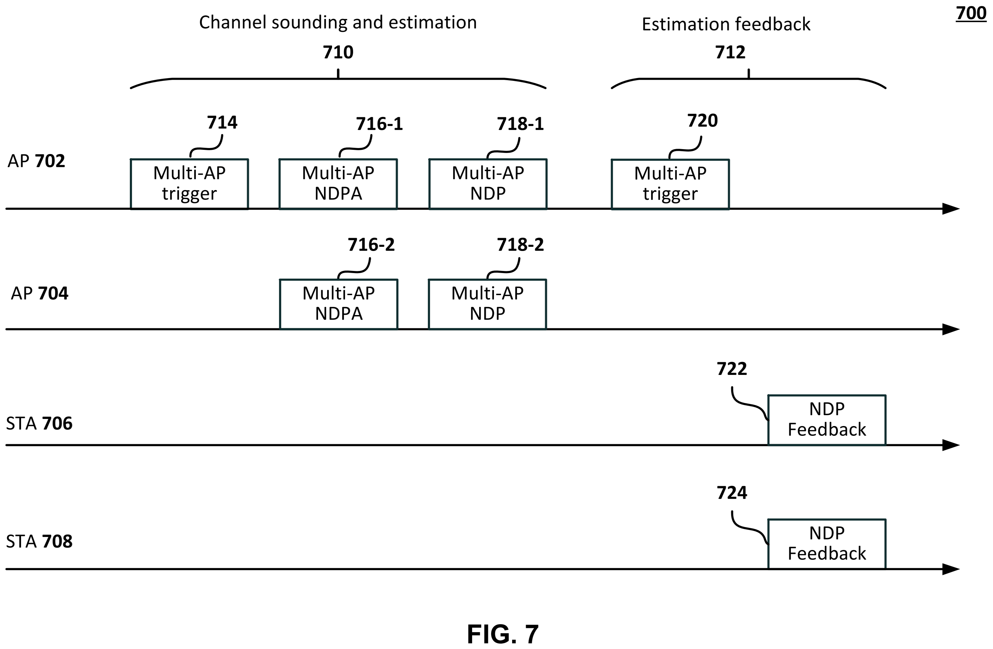

FIG. 7 shows an example 700 of a multi-AP sounding phase. Multi-AP sounding phase 700 may be an example of multi-AP sounding phase 614. As shown in FIG. 7, example 700 may comprise a master AP 702 and a slave AP 704 of a multi-AP group. Example 700 may further include a STA 706 associated with AP 702 and a STA 708 associated with AP 704.

As shown in FIG. 7, multi-AP sounding phase 700 may comprise frame exchanges to allow AP 702 (the master AP) to acquire channel state information (CSI) of channels in the multi-AP group. Phase 700 may be comprised of a first subphase 710 and a second subphase 712.

During the first subphase 710, APs may initiate channel sounding and STAs may estimate channel state information (CSI). AP 702 may send a frame 714 to AP 704 (the slave AP) to trigger multi-AP sounding. Frame 714 may comprise a multi-AP trigger frame. Subsequently, APs 702 and 704 may send (e.g., transmit) respectively announcement frames 716-1 and 716-2 to their respective associated STAs 706 and 708 to announce the transmission of sounding frames. Frames 716-1 and 716-2 may comprise multi-AP null data packet announcement (NDPA) frames. Frames 716-1 and 716-2 may be sent (e.g., transmitted) simultaneously. Next, APs 702 and 704 may send (e.g., transmit) respectively frames 718-1 and 718-2 to STAs 706 and 708 respectively. Frames 718-1 and 718-2 may comprise multi-AP null data packet (NDP) frames. STAs 706 and 708 receive frames 718-1 and 718-2 respectively and perform channel estimation of the channels from AP 702 to STA 706 and from AP 704 to STA 708, respectively.

During the second subphase 712, APs may initiate a procedure for STAs to feed back channel estimates to the APs. AP 702 may send (e.g., transmit) a frame 720 to trigger STAs 706 and 708 to send (e.g., transmit) their channel estimates to APs 702 and 704 respectively. Frame 720 may comprise a multi-AP trigger frame. STAs 706 and 708 may send (e.g., transmit) respectively frames 722 and 724 including feedback of channel estimates to APs 702 and 704 respectively. Frames 722 and 724 may comprise NDP feedback frames. The feedback of channel estimates may comprise NDP feedback, CSI-related information, a beamforming report (BFR), or a channel quality indication (CQI) report.

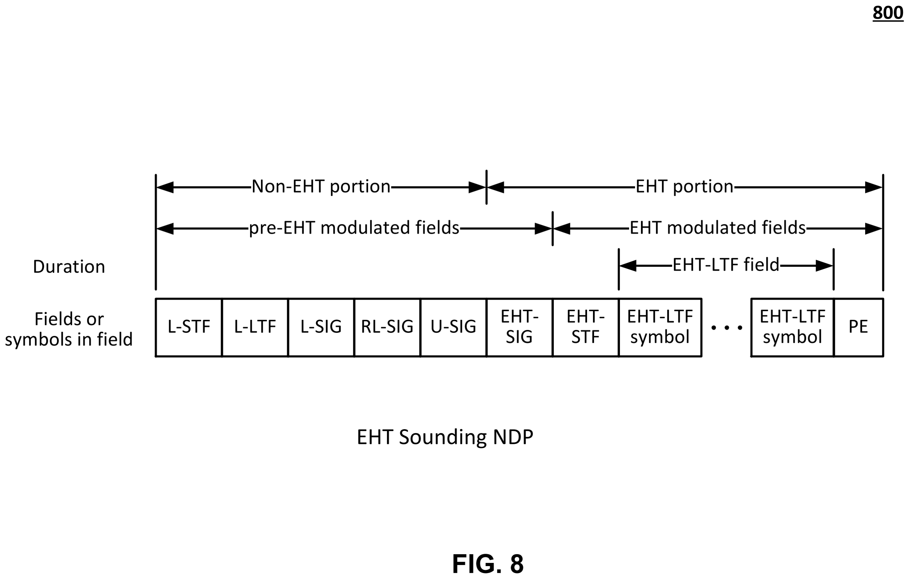

FIG. 8 shows an EHT sounding NDP 800. EHT sounding NDP 800 may be used for sounding to one or more users. EHT sounding NDP 800 may be a variant of an EHT multi-user (MU) PPDU used by STAs conforming to the IEEE 802.11be standard amendment. An EHT sounding NDP may be indicated by setting a "PPDU Type and Compression Mode" field of a U-SIG field of an EHT PPDU to 1, an EHT-SIG MCS field of an EHT-SIG field of the EHT PPDU to 0, and a "Number of EHT-SIG Symbols" field to 0 in the U-SIG field of the EHT PPDU. An ultra high reliability (UHR) NDP used by STAs conforming to the IEEE 802.11bn standard amendment may use the same, or similar, structure as EHT sounding NDP 800. A UHR NDP may have the same fields as the EHT sounding NDP, and with a PHY version ID in the U-SIG field indicating UHR instead of EHT. The EHT-SIG field as shown in FIG. 8 may be replaced by a UHR-SIG field which may have different carried information compared to the EHT-SIG field, and with the same modulation and transmission procedure. CBF may use an EHT sounding NDP 800, a UHR NDP format (to the extent a UHR NDP format differs from an EHT format), or a high efficiency (HE) NDP format used by STAs conforming to the IEEE 802.11ax.

EHT sounding NDP 800, As shown in FIG. 8, may comprise a non-high throughput (non-HT) short training field (L-STF), a non-HT long training field (L-LTF), a non-HT signal field (L-SIG), a repeated non-HT signal field (RL-SIG), a universal signal field (U-SIG), an EHT signal field (EHT-SIG), an EHT short training field (EHT-STF), an EHT long training field (EHT-LTF), and a packet extension (PE) field. The L-STF, L-LTF, L-SIG, RL-SIG, U-SIG, and EHT-SIG fields may be referred to as pre-EHT modulated fields, and the EHT-STF, EHT-LTF, and PE fields may be referred to as EHT modulated fields.

The EHT-LTF field may comprise one or more EHT-LTF symbols. The quantity/number of EHT-LTF symbols may be indicated in a "number of EHT-LTF symbols" field of the EHT-SIG field.

The EHT-LTF field may provide a means for a receiver of EHT sounding NDP 800 to estimate the MIMO channel between the set of constellation mapper outputs and the receive chains. A spatial stream may refer to one or more symbols that may be sent (e.g., transmitted) over multiple spatial dimensions that are created by the use of multiple antennas at both ends of a communications link. The transmitter, in an EHT MU PPDU, may provide training for $N_{SS,r,total}$ spatial streams used for the transmission of PSDU(s) in an r-th resource unit (RU). In an EHT TB PPDU, the transmitter of user u in the r-th RU may provide training for $N_{SS,r,u}$ spatial streams used for the transmission of the PSDU. The MIMO channel, for each subcarrier in the r-th RU, that can be estimated may be an $N_{RX} \times N_{SS,r,total}$ matrix.

An EHT transmission may have a preamble that contains EHT-LTF symbols, where the data tones of each EHT-LTF symbol are multiplied by entries belonging to a matrix $P_{EHT-LTF}$, to enable channel estimation at the receiver. The pilot subcarriers of each EHT-LTF symbol may be multiplied by the entries of a matrix $R_{EHT-LTF}$ to allow receivers to track phase and/or frequency offset during MIMO channel estimation using the EHT-LTF. The pilot subcarriers of each EHT-LTF symbol may be multiplied by the entries of a matrix $R_{EHT-LTF}$ to allow receivers to track phase and/or frequency offset during MIMO channel estimation using the EHT-LTF, for example, if single stream pilots are used in $2 \times$ or $4 \times$ EHT-LTF. Single stream pilots may be used for all spatial multiplexing modes (both UL and DL) defined in EHT. Single stream pilots may be used for all spatial multiplexing modes (both UL and DL) defined in EHT, for example, except if $1 \times$ EHT-LTF is used. $P_{EHT-LTF}$ may be defined such that each modulated spatial stream in an RU is active on all subcarriers in that RU for which the EHT-LTF sequence takes a nonzero value.

The quantity/number of EHT-LTF symbols $N_{EHT-LTF}$, in an EHT MU PPDU, may be indicated in the EHT-SIG field. The initial quantity/number of EHT-LTF symbols, initial $N_{EHT-LTF}$ in a non-OFDMA EHT MU PPDU or an EHT sounding NDP, may be a function of the total quantity/number of spatial streams $N_{SS}$.

The quantity/number of EHT-LTFs may be larger than the initial quantity/number of EHT-LTFs determined by the total quantity/number of spatial streams, in order to improve the MIMO channel estimation for the reception of a non-OFDMA EHT MU PPDU or an EHT sounding NDP. The total quantity/number of EHT-LTFs (which is signaled separately from NSS) may/can be no more than twice the initial quantity/number of EHT-LTFs determined by the quantity/number of spatial streams and chosen from the set {2 4 8}. The total quantity/number of EHT-LTFs (which is signaled separately from NSS) may/can be no more than twice the initial quantity/number of EHT-LTFs determined by the quantity/number of spatial streams and chosen from the set {2 4 8}, for example, if additional EHT-LTFs are used. Supporting additional EHT-LTFs may be optional for the receiver, which is indicated by the maximum quantity/number of supported EHT-LTFs subfield of the EHT PHY capabilities information field.

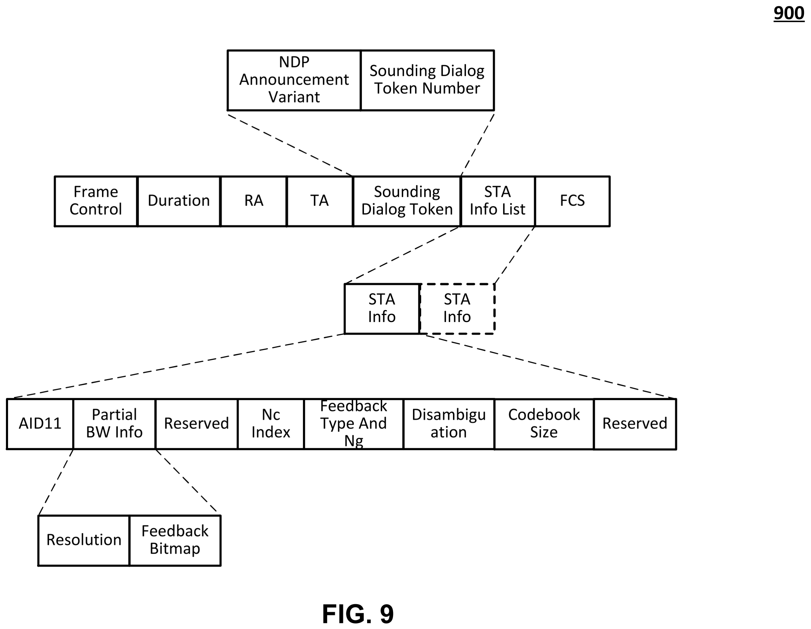

FIG. 9 shows an example NDPA frame 900. Example NDPA frame 900 as shown in FIG. 9 may include a Frame Control field, a Duration field, a receiver address (RA) field, a transmitter address (TA) field, a Sounding Dialog Token field, a STA Info List field, and a frame check sequence (FCS). The Frame Control field may indicate a type (NDPA) of NDPA frame 900. The Duration field may indicate a duration of NDPA frame 900. The RA field may indicate an address of one or more receiver of NDPA frame 900. The TA field may indicate an address of a transmitter of NDPA frame 900. The TA field may be set to the address of a STA sending (e.g., transmitting) NDPA frame 900 or a bandwidth signaling TA of the STA sending (e.g., transmitting) NDPA frame 900.

The Sounding Dialog Token field may include an NDP Announcement Variant subfield and a Sounding Dialog Token Number subfield. The NDP Announcement Variant subfield based on its value may indicate a variant of NDPA frame 900 from among four variants: a VHT NDP Announcement frame, an HE NDP Announcement frame, a Ranging NDP Announcement frame, and an EHT NDP Announcement frame. The NDP Announcement Variant subfield may be set to 2 to identify NDPA frame 900 as an HE NDP Announcement frame. The NDP Announcement Variant subfield may be set to 3 to identify NDPA frame 900 as an EHT NDP Announcement frame. The Duration, RA, and TA fields, in the HE NDP Announcement and the EHT NDP Announcement frame, may be set as in the VHT NDP Announcement frame. The Sounding Dialog Token Number subfield may contain a value selected by the transmitter of NDPA frame 900 to identify NDPA frame 900.

The STA Info List field may contain one or more STA Info fields. The STA Info List field may include at most one STA Info field per STA to which NDPA frame 900 is addressed in the RA field. The RA field may be set to the address of the STA indicated in the only STA Info field of NDPA frame 900. The RA field may be set to the address of the STA indicated in the only STA Info field of NDPA frame 900, for example, if the STA Info List field includes only one STA Info field with a value less than 2008 in an AID11 subfield, and/or NDPA frame 900 is a VHT, HE, or EHT NDP Announcement frame. The RA field may be set to a broadcast address. The RA field may be set to a broadcast address, for example, if STA Info List field includes more than one STA Info field with a value less than 2008 in the AID11 subfield.

A STA Info field may include an AID 11 subfield, a Partial Bandwidth (BW) Info subfield, an Nc Index subfield, a Feedback Type and Ng subfield, a Disambiguation subfield, and a Codebook Size subfield. The AID11 subfield may contain an identifier of a STA expected to process an EHT sounding NDP that follows NDPA frame 900 and to prepare sounding feedback based on the EHT sounding NDP.

The Partial BW Info subfield may include a Resolution subfield and a Feedback Bitmap subfield. The Resolution subfield may indicate a resolution bandwidth for each bit in the Feedback Bitmap subfield. The Feedback Bitmap subfield may indicate whether feedback is requested for each resolution bandwidth and is ordered from a lowest frequency to a highest frequency, followed by zeros. A bit in the Feedback Bitmap subfield set to 1 may indicate that feedback is requested for the corresponding frequency with the resolution bandwidth. For example, a first position bit (B1) of the Feedback Bitmap subfield set to 1 may indicate a request for feedback for the lowest frequency at the indicated resolution bandwidth.

Bit B0 of the Resolution subfield may be set to 0 to indicate a resolution bandwidth of 20 MHz. Bit B0 of the Resolution subfield may be set to 0 to indicate a resolution bandwidth of 20 MHz, for example, if NDPA frame 900 is an EHT NDP Announcement frame and the bandwidth of a PPDU carrying NDPA frame 900 is less than 320 MHz.

The first position bit (B1) of the Feedback Bitmap subfield may be set to 1 to indicate a request for feedback on a 242-tone RU. The first position bit (B1) of the Feedback Bitmap subfield may be set to 1 to indicate a request for feedback on a 242-tone RU, for example, if NDPA frame 900 is an EHT NDP Announcement frame and the bandwidth of the PPDU carrying NDPA frame 900 is equal to 20 MHz. Bits B2-B8 of the Feedback Bitmap subfield may be set to 0.

The first position bit (B1) and the second position bit (B2) of the Feedback Bitmap subfield respectively may indicate a request for feedback on a respective 242-tone RU (of two 242-tone RUs) from lower frequency to higher frequency. The first position bit (B1) and the second position bit (B2) of the Feedback Bitmap subfield respectively may indicate a request for feedback on a respective 242-tone RU (of two 242-tone RUs) from lower frequency to higher frequency, for example, if NDPA frame 900 is an EHT NDP Announcement frame and the bandwidth of the PPDU carrying NDPA frame 900 is equal to 40 MHz. Bits B3-B8 of the Feedback Bitmap subfield may be set to 0.

Bits B1-B4 of the Feedback Bitmap subfield set to 1 may indicate a request for feedback on a 996-tone RU. Bits B1-B4 respectively may indicate a request for feedback on a respective 242-tone RU (of four 242-tone RUs) from lower frequency to higher frequency. Bits B1-B4 of the Feedback Bitmap subfield set to 1 may indicate a request for feedback on a 996-tone RU, for example, if NDPA frame 900 is an EHT NDP Announcement frame and the bandwidth of the PPDU carrying NDPA frame 900 is equal to 80 MHz. Bits B1-B4 respectively may indicate a request for feedback on a respective 242-tone RU (of four 242-tone RUs) from lower frequency to higher frequency, for example, if NDPA frame 900 is not an EHT NDP Announcement frame, and/or the bandwidth of the PPDU carrying NDPA frame 900 is not equal to 80 MHz. Bits B5-B8 of the Feedback Bitmap subfield may be set to 0.

Bits B1-B4 of the Feedback Bitmap subfield set to 1 may indicate a request for feedback on a lower 996-tone RU (among a lower 996-tone RU and an upper 996-tone RU). Bits B1-B4 of the Feedback Bitmap subfield set to 1 may indicate a request for feedback on a lower 996-tone RU (among a lower 996-tone RU and an upper 996-tone RU), for example, if NDPA frame 900 is an EHT NDP Announcement frame and the bandwidth of the PPDU carrying NDPA frame 900 is equal to 160 MHz. Bits B1-B4 may respectively indicate a request for feedback on a respective 242-tone RU (of four 242-tone RUs) from lower frequency to higher frequency in the lower 80 MHz of the 160 MHz PPDU bandwidth. Bits B1-B4 may respectively indicate a request for feedback on a respective 242-tone RU (of four 242-tone RUs) from lower frequency to higher frequency in the lower 80 MHz of the 160 MHz PPDU bandwidth, for example, if NDPA frame 900 is not an EHT NDP Announcement frame, and/or the bandwidth of the PPDU carrying NDPA frame 900 is not equal to 160 MHz. Bits B5-B8 set to 1 may indicate a request for feedback on the upper 996-tone RU (among the lower 996-tone RU and the upper 996-tone RU). Bits B5-B8 may respectively indicate a request for feedback on a respective 242-tone RU (of the four 242-tone RUs) from lower frequency to higher frequency in the upper 80 MHz of the 160 MHz.

Bit B0 of the Resolution subfield set to 1 may indicate a resolution bandwidth of 40 MHz. Bit B0 of the Resolution subfield set to 1 may indicate a resolution bandwidth of 40 MHz, for example, if NDPA frame 900 is an EHT Announcement frame and the bandwidth of the PPDU carrying NDPA frame 900 is equal to 320 MHz. Bits B1 and B2 of the Feedback Bitmap subfield may indicate a request for feedback request on a lowest 996-tone RU (among a lowest 996-tone RU, a second lowest 996-tone RU, a third lowest 996-tone RU, and a highest 996-tone RU). Bits B1 and B2 of the Feedback Bitmap subfield may indicate a request for feedback request on a lowest 996-tone RU (among a lowest 996-tone RU, a second lowest 996-tone RU, a third lowest 996-tone RU, and a highest 996-tone RU), for example, if the bits B1 and B2 of the Feedback Bitmap subfield are both set to 1. Bits B1 and B2 respectively may indicate a request for feedback on a respective 484-tone (of two 484-tone RUs) from lower frequency to higher frequency in a lowest 80 MHz of the 320 MHz PPDU bandwidth. Bits B1 and B2 respectively may indicate a request for feedback on a respective 484-tone (of two 484-tone RUs) from lower frequency to higher frequency in a lowest 80 MHz of the 320 MHz PPDU bandwidth, for example, if the bits B1 and B2 of the Feedback Bitmap subfield are not both set to 1.

Bits B3 and B4 of the Feedback Bitmap subfield may indicate a request for feedback on the second lowest 996-tone RU. Bits B3 and B4 of the Feedback Bitmap subfield may indicate a request for feedback on the second lowest 996-tone RU, for example, if bits B3 and B4 of the Feedback Bitmap subfield are both set to 1. Bits B3 and B4 may indicate respectively a request for feedback on a respective 484-tone RU (of two 484-tone RUs) from lower frequency to higher frequency in a second lowest 80 MHz of the 320 MHz PPDU bandwidth. Bits B3 and B4 may indicate respectively a request for feedback on a respective 484-tone RU (of two 484-tone RUs) from lower frequency to higher frequency in a second lowest 80 MHz of the 320 MHz PPDU bandwidth, for example, if bits B3 and B4 of the Feedback Bitmap subfield are not both set to 1.

Bits B5 and B6 of the Feedback Bitmap subfield may indicate a request for feedback on the third lowest 996-tone RU. Bits B5 and B6 of the Feedback Bitmap subfield may indicate a request for feedback on the third lowest 996-tone RU, for example, if bits B5 and B6 of the Feedback Bitmap subfield are both set to 1.

B5 and B6 may respectively indicate a request for feedback on respective 484-tone RU (of two 484-tone RUs) from lower frequency to higher frequency in a third lowest 80 MHz of the 320 MHz PPDU bandwidth. B5 and B6 may respectively indicate a request for feedback on respective 484-tone RU (of two 484-tone RUs) from lower frequency to higher frequency in a third lowest 80 MHz of the 320 MHz PPDU bandwidth, for example, if bits B5 and B6 of the Feedback Bitmap subfield are not both set to 1.

Bits B7 and B8 of the Feedback Bitmap subfield may indicate a request for feedback on the highest 996-tone RU. Bits B7 and B8 of the Feedback Bitmap subfield may indicate a request for feedback on the highest 996-tone RU, for example, if bits B7 and B8 of the Feedback Bitmap subfield are both set to 1. Bits B7 and B8 may indicate respectively a request for feedback on respective 484-tone RU (of two 484-tone RUs) from lower frequency to higher frequency in a highest 80 MHz of the 320 MHz PPDU bandwidth. Bits B7 and B8 may indicate respectively a request for feedback on respective 484-tone RU (of two 484-tone RUs) from lower frequency to higher frequency in a highest 80 MHz of the 320 MHz PPDU bandwidth, for example, if bits B7 and B8 of the Feedback Bitmap subfield are not both set to 1. The feedback tone set for each 484-tone RU may be composed of the feedback tone sets of the two 242-tone RUs overlapping with the 484-tone RU.

The Nc Index subfield, in FIG. 9, may indicate the quantity/number of columns of a beamforming feedback matrix (reported in a compressed beamforming report based on (e.g., in response to) NDPA frame 900) minus 1, for example, if the feedback is SU feedback or MU feedback. The Nc Index subfield may indicate the quantity/number of spatial streams of a CQI report (reported in a CQI report based on/in response to NDPA frame 900) minus 1, for example, if the feedback is CQI feedback.

The "Feedback Type and Ng" subfield may indicate a feedback type and a subcarrier grouping, Ng, to be used by the STA generating the sounding feedback based on the EHT sounding NDP that follows NDPA frame 900. The feedback type may be SU feedback, MU feedback, or CQI feedback. The subcarrier grouping, Ng, may indicate the quantity/number (e.g., 4, 16) of adjacent subcarriers that are to be grouped in a beamforming report. A single beamforming feedback matrix may be reported for each group of Ng adjacent subcarriers. A single beamforming feedback matrix may be reported for each group of Ng adjacent subcarriers, for example, if grouping is used. The "Feedback Type and Ng" subfield and the Codebook Size subfield for EHT trigger-based (TB) sounding may be the same as for HE TB sounding. The "Feedback Type and Ng" and the Codebook Size subfields for EHT non-TB sounding may be the same as for HE non-TB sounding.

If NDPA frame 900 is an EHT NDP Announcement frame with more than one STA Info field that contains a value less than 2008 in the AID11 subfield, the RA field may indicate a broadcast address, and the Nc Index subfield may be set as follows:

-    If the "Feedback Type and Ng" subfield and the Codebook Size subfield indicate single user (SU) or multi-user (MU), the Nc Index subfield may indicate the quantity/number of columns in the compressed beamforming feedback matrix minus 1, Nc-1. Nc Index subfield values above 7 may be reserved.

-    If the "Feedback Type and Ng" subfield and the Codebook Size subfield indicate channel quality information (CQI), the Nc Index subfield may indicate the quantity/number of spatial streams in the CQI report minus 1, Nc-1. Nc Index subfield values above 7 may be reserved.

If NDPA frame 900 is an EHT NDP Announcement frame with a single STA Info field that contains a value less than 2008 in the AID11 subfield, the RA field may indicate an individual address, and the Nc index subfield may be reserved.

A UHR NDP Announcement frame used by STAs conforming to the IEEE 802.11bn standard amendment may use the same, or similar, structure as NDPA frame 900. A UHR NDP Announcement frame may have the same fields as the EHT NDP Announcement frame and with an NDPA version field indicating that the EHT NDP Announcement frame may be followed by a UHR Sounding NDP instead of an EHT Sounding NDP, and that the UHR NDP Announcement frame may be soliciting a UHR Compressed Beamforming/CQI frame instead of an EHT Compressed Beamforming/CQI frame as discussed herein.

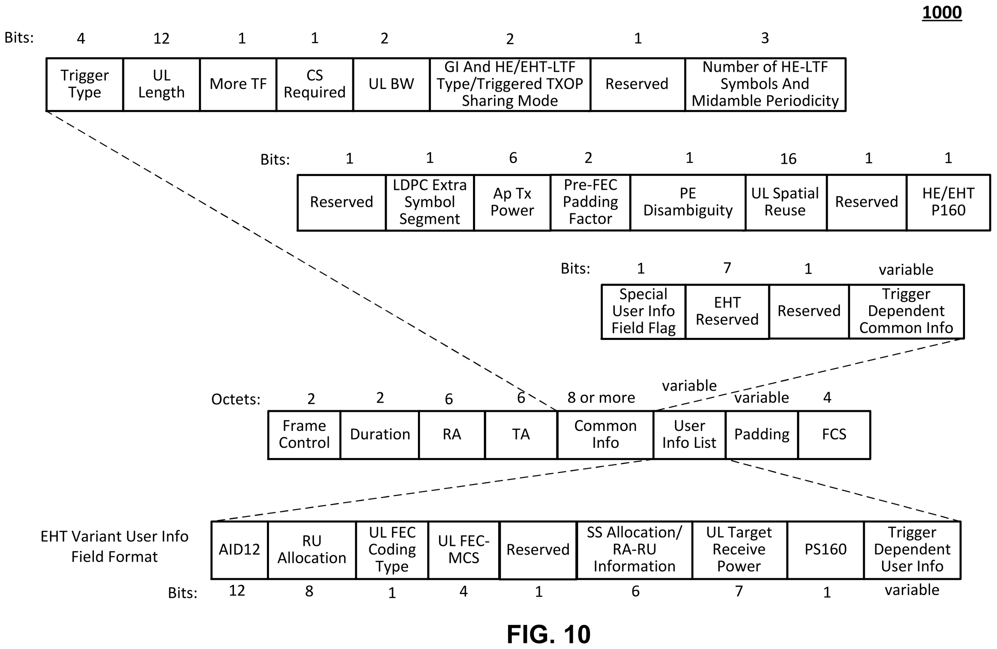

FIG. 10 shows an example format of a trigger frame 1000. Trigger frame 1000 may be used by an AP to allocate resources for and solicit one or more TB PPDU transmissions from one or more STAs. Trigger frame 1000 may also carry other information required by a responding STA to send (e.g., transmit) a TB PPDU to the AP.

Trigger frame 1000 as shown in FIG. 10 may include a Frame Control field, a Duration field, a receiver address (RA) field, a transmitter address (TA) field, a Common Info field, a User Info List field, a Padding field, and an FCS field. The Frame Control field may include the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, the Duration field, in control frames of the power save poll (PS-Poll) subtype, may carry an association identifier (AID) of the STA that sent (e.g., transmitted) the frame in the 14 least significant bits (LSB), and the 2 most significant bits (MSB) are both set to 1. The Duration field, in other frames sent (e.g., transmitted) by STAs, may contain a duration value (in microseconds) which is used by a recipient to update a network allocation vector (NAV).

The RA field may be the address of the STA that is intended to receive the incoming transmission from the sending (e.g., transmitting) station. The TA field may be the address of the STA sending (e.g., transmitting) trigger frame 1000 if trigger frame 1000 is addressed to STAs that belong to a single BSS. The TA field may be the sent (e.g., transmitted) BSSID if trigger frame 1000 is addressed to STAs from at least two different BSSs of the multiple BSSID set.

The Common Info field may specify a trigger frame type of trigger frame 1000, a transmit power of trigger frame 1000 in dBm, and several key parameters of a TB PPDU that is sent (e.g., transmitted) by a STA based on (e.g., in response to) trigger frame 1000. The trigger frame type of a trigger frame used by an AP to receive QoS data using UL MU operation may be referred to as a basic trigger frame. A non-EHT non-AP HE STA may interpret the Common Info field as HE variant. A non-AP EHT STA may interpret the Common Info field as HE variant if B54 and B55 in the Common Info field are equal to 1; and may interpret the Common Info field as EHT variant otherwise. The HE variant Common Info field and the EHT variant Common Info field may use the same encoding method for the Trigger Type, UL Length, More TF, CS Required, LDPC Extra Symbol Segment, AP TX Power, Pre-FEC Padding Factor, PE Disambiguity, and Trigger Dependent Common Info subfields.

The User Info List field may contain zero or more User Info fields. There may be three variants for the User Info field, which are the Special User Info field, the EHT variant User Info field, and the HE variant User Info field.

The Special User Info field may be a User Info field that does not carry the user specific information and carries the extended common information not provided in the Common Info field. The Special User Info Field Flag subfield of the EHT variant Common Info field may be set to 0. The Special User Info Field Flag subfield of the EHT variant Common Info field may be set to 0, for example, if the Special User Info field is included in the Trigger frame. The Special User Info Field Flag subfield of the EHT variant Common Info field may be set to 1. The Special User Info Field Flag subfield of the EHT variant Common Info field may be set to 1, for example, if the Special User Info field is not included in the Trigger frame. The Special User Info field may be identified by an AID12 value of 2007 and may be optionally present in a Trigger frame that is generated by an EHT AP. The Special User Info field, if present, may be located immediately after the Common Info field of the Trigger frame and may carry information for the U-SIG field of a solicited EHT TB PPDU. The PHY Version Identifier subfield may indicate the PHY version of the solicited TB PPDU that is not an HE TB PPDU. The PHY Version Identifier subfield may be set to 0 for EHT. Other values from 1 to 7 may be reserved. The UL Bandwidth (BW) Extension subfield, together with the UL BW subfield in the Common Info field, may indicate the bandwidth of the solicited TB PPDU from the addressed EHT STA (i.e., the bandwidth in the U-SIG field of the EHT TB PPDU). The EHT Spatial Reuse n subfield may carry the values to be included in the corresponding Spatial Reuse n subfield in the U-SIG field of the EHT TB PPDU. The U-SIG Disregard And Validate subfield may carry the values to be included in the Disregard and Validate subfields of the U-SIG field of the solicited EHT TB PPDUs. The presence and length of the Trigger Dependent User Info subfield in the Special User Info field may depend on the variant of the Trigger frame.

The EHT variant User Info field may contain a User Info field per STA addressed in trigger frame 1000. The per STA User Info field may include, among others, an AID12 subfield, an RU Allocation subfield, a UL FEC Coding Type subfield, a UL EHT-MCS subfield, a Reserved subfield, a Spatial Stream (SS) Allocation/RA-RU information subfield, a UL Target Receive Power subfield, and a Power Save (PS) 160 subfield to be used by a STA in a TB PPDU sent (e.g., transmitted) based on (e.g., in response to) trigger frame 1000, and a Trigger Dependent User Info subfield. The RU Allocation subfield in an EHT variant User Info field in a Trigger frame that is not an MU-RTS Trigger frame, along with the UL BW subfield in the Common Info field, the UL BW Extension subfield in the Special User Info field, and the PS160 subfield in the EHT variant User Info field, may identify the size and the location of the RU or MRU. The values of PS160 subfield and B0 of RU Allocation subfield may indicate the 80 MHz frequency subblock in which the RU or MRU is located for 26-tone RU, 52-tone RU, 106-tone RU, 242-tone RU, 484-tone RU, 996-tone RU, 52+26-tone RU, and 106+26-tone RU. The values of PS160 subfield may indicate the 160 MHz segment in which the RU or MRU is located for 2□996-tone RU, 996+484-tone MRU, and 996+484+242-tone MRU. The UL FEC Coding Type subfield of the User Info field may indicate the code type of the solicited EHT TB PPDU. The UL FEC Coding Type subfield may be set to 0 to indicate BCC and set to 1 to indicate LDPC. The UL EHT-MCS subfield of the User Info field may indicate the EHT-MCS of the solicited EHT TB PPDU. The SS Allocation subfield of the EHT variant User Info field may indicate the spatial streams of the solicited EHT TB PPDU. The UL Target Receive Power subfield may indicate the expected receive signal power, measured at the AP's antenna connector and averaged over the antennas, for the EHT portion of the EHT TB PPDU sent (e.g., transmitted) on the assigned RU. The Trigger Dependent User Info subfield may be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA. The RA-RU Information subfield may be reserved in the EHT variant User Info field.

The Padding field may be optionally present in management frame 400 to extend the frame length to give recipient STAs enough time to prepare a response for transmission one SIFS after the frame is received. The Padding field, if present, may be at least two octets in length and is set to all 1s. The FCS field may be used by a STA to validate a received frame and to interpret certain fields from the MAC headers of a frame.

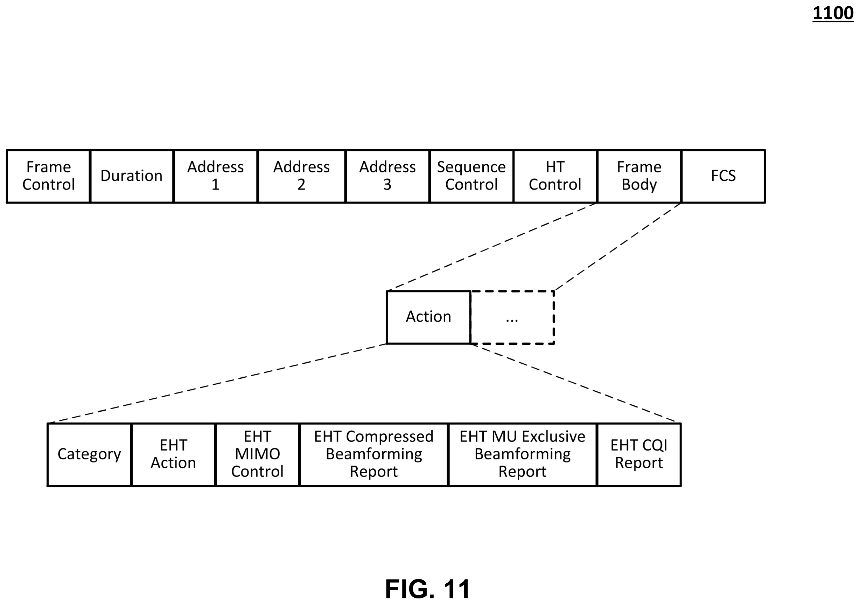

FIG. 11 shows an example EHT compressed beamforming/CQI frame 1100. EHT Compressed Beamforming/CQI frame 1100 may be an Action No Ack frame of category EHT. The Action field of an EHT Compressed Beamforming/CQI frame may contain the information including a Category field, an EHT Action field, an EHT MIMO Control field, an EHT Compressed Beamforming Report field, an EHT MU Exclusive Beamforming Report field, an EHT CQI Report. The Category field may be set to a value of 36 for EHT category.

The EHT Action field, in the octet immediately after the Category field, may differentiate the EHT Action frame formats. The EHT Action field may value associated with each frame format within the EHT category. The EHT Action field may be set to a value of 0 for EHT Compressed Beamforming/CQI.

The EHT MIMO Control field may comprise a Nc Index subfield, a Nr Index subfield, a BW subfield, a Grouping subfield, a Codebook Information subfield, a Feedback Type subfield, a Remaining Feedback Segments subfield, a First Feedback Segment subfield, a Partial BW Info subfield, a Sounding Dialog Token Number subfield. The Nc Index, Nr Index, BW, Grouping, Codebook Information, Feedback Type, and Sounding Dialog Token Number subfields may be reserved, the First Feedback Segment subfield may be set to 0, and the Remaining Feedback Segments subfield may be set to 7, in an EHT Compressed Beamforming/CQI frame not carrying all or part of an EHT compressed beamforming/CQI report.

The EHT Compressed Beamforming Report field may carry the average SNR of each spatial stream and compressed beamforming feedback matrices for use by a transmit beamformer to determine steering matrices for explicit feedback beamforming. The EHT MU Exclusive Beamforming Report field may carry explicit feedback in the form of delta SNRs. The information in the EHT Compressed Beamforming Report field and the EHT MU Exclusive Beamforming Report field may be used by the transmit MU beamformer to determine the steering matrices for DL MU-MIMO.

The EHT CQI Report field may carry the per-RU average SNRs of each spatial stream, where each per-RU average SNR may be the arithmetic mean of the SNR in decibels over the subcarriers of a 26-tone RU for which feedback is being requested. The EHT CQI Report field may contain EHT CQI report information. EHT CQI Report information may be included in the EHT compressed beamforming/CQI report, for example, if the Feedback Type subfield in the EHT MIMO Control field indicates CQI feedback.

The presence and contents of the EHT Compressed Beamforming Report field, EHT MU Exclusive Beamforming Report field, and EHT CQI Report field may be dependent on the values of the Feedback Type subfield of the EHT MIMO Control field. A Vendor Specific element may not be present in the EHT Compressed Beamforming/CQI frame.

A beamforming report poll (BFRP) trigger frame may be a variation of the trigger frame 1000 shown in FIG. 10. The Trigger Dependent Common Info subfield may not be present in the BFRP Trigger frame. The Trigger Dependent User Info subfield of the BFRP Trigger frame may include a Feedback Segment Retransmission Bitmap subfield. The Feedback Segment Retransmission Bitmap subfield may indicate the requested feedback segments of an HE or EHT compressed beamforming/CQI report. The feedback segment with the Remaining Feedback Segments subfield in the HE MIMO Control field equal to n may be requested. The feedback segment with the Remaining Feedback Segments subfield in the HE MIMO Control field equal to n may be requested, for example, if the bit in position n (n=0 for LSB and n=7 for MSB) is 1. The feedback segment with the Remaining Feedback Segments subfield in the HE MIMO Control field equal to n may not be requested. The feedback segment with the Remaining Feedback Segments subfield in the HE MIMO Control field equal to n may not be requested, for example, if the bit in position n is 0.

All of the bits in the Feedback Segment Retransmission Bitmap subfield may be set to 1. All of the bits in the Feedback Segment Retransmission Bitmap subfield may be set to 1, for example, if a BFRP Trigger frame solicits an EHT compressed beamforming/CQI report.

A UHR compressed beamforming/CQI frame used by STAs conforming to the IEEE 802.11bn standard amendment may use the same, or similar, structure as the EHT compressed beamforming/CQI frame 1100. A UHR compressed beamforming/CQI frame may have the same fields as the EHT compressed beamforming/CQI frame 1100 and with a UHR Action field indicating that the EHT compressed beamforming/CQI frame 1100 is a feedback frame in accordance to a previously received UHR NDP Announcement frame and a UHR Sounding NDP.

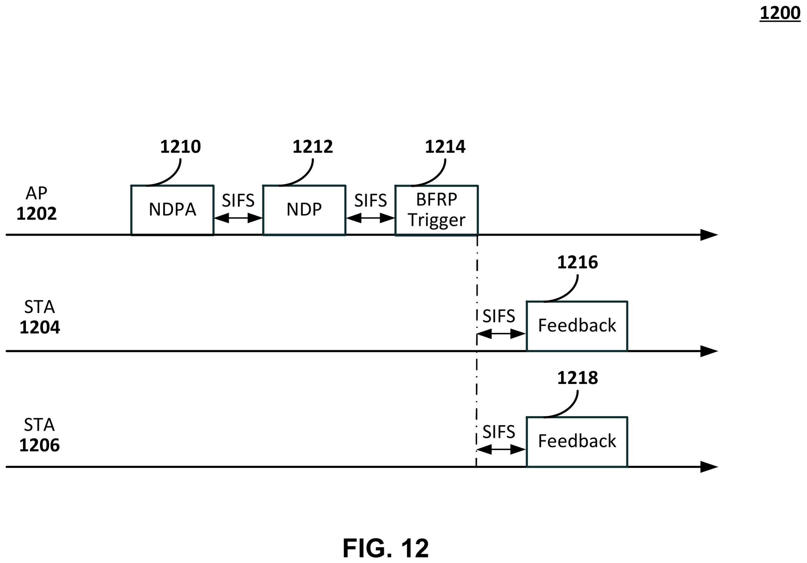

FIG. 12 shows an example 1200 of a trigger based (TB) sounding sequence. Example 1200, as shown in FIG. 12, may include an AP 1202 and STAs 1204 and 1206. Example 1200 may begin with AP 1202 initiating the TB sounding sequence by sending (e.g., transmitting) an NDPA frame 1210 to STAs 1204 and 1206. NDPA frame 1210 may be an example of NDPA frame 900 described herein. AP 1202 may be an EHT beamformer. NDPA frame 1210 may include two STA Info fields with AID11 subfields set respectively to the AIDs of STAs 1204 and 1206. An RA field of NDPA frame 1210 may be set to a broadcast address. Example 1200 is discussed as an EHT beamformer, and this is merely an example and not limited. Example 1200, and other examples described throughout, may use UHR beamforming by replacing EHT frame(s) with corresponding UHR frame(s).

NDPA frame 1210 may solicit SU feedback, MU feedback, or CQI feedback from STAs 1204 and 1206. SU feedback may comprise a compressed beamforming report. The compressed beamforming report may comprise an average SNR of each spatial stream and compressed beamforming feedback matrices for use by AP 1202 to determine steering matrices for explicit feedback beamforming to STAs 1204 and 1206. MU feedback may comprise a compressed beamforming report and an MU exclusive beamforming report. The MU exclusive beamforming report may comprise explicit feedback in the form of delta SNRs. CQI feedback may comprise a CQI report. The CQI report may comprise per-RU average SNRs of each spatial stream. A per-RU average SNR may comprise an arithmetic mean of the SNR in decibels over the subcarriers of a 26-tone RU for which feedback is being requested. AP 1202 may be an EHT beamformer. NDPA frame 1210 may include a first STA Info field and a second STA Info field. The AID11 subfield of the first STA Info field may be set to the AID of STA 1204. The AID11 subfield of the second STA Info field may be set to the AID of STA 1206.

A SIFS after sending (e.g., transmitting) NDPA frame 1210, AP 1202 may send (e.g., transmit) an NDP 1212. NDP 1212 may be an EHT sounding NDP. A SIFS after sending (e.g., transmitting) NDP 1212, AP 1202 may send (e.g., transmit) a trigger frame 1214. Trigger frame 1214 may be a beamforming report poll frame (BFRP) frame. Trigger frame 1214 may address STAs 1204 and 1206 as beamformees. A SIFS after receiving trigger frame 1214, STAs 1204 and 1206 may send (e.g., transmit) respective feedback frames 1216 and 1218. Feedback frames 1216 and 1218 may each comprise an EHT compressed beamforming/CQI frame and may be carried in a TB PPDU. The EHT compressed beamforming/CQI frame may comprise one or more beamforming reports. For example, the beamforming report may comprise the compressed beamforming report, the MU exclusive beamforming report, or the CQI report.

AP 1202 may send (e.g., transmit) additional trigger frames in the same TXOP to solicit feedback frames from EHT beamformees not addressed in trigger frame 1214. AP 1202 may not send (e.g., transmit) a trigger frame that solicits a STA identified in NDPA frame 1210 unless the trigger frame is in the same TXOP as NDPA frame 1210.

Example 1200 may represent an EHT TB sounding sequence. AP 1202 may represent an EHT beamformer. STAs 1204 and 1206 may represent EHT beamformees. NDPA frame 1210 may be an EHT NDPA.

AP 1202, as an EHT beamformer, may not send (e.g., transmit) a BFRP Trigger frame that solicits a STA (e.g., STA 1204 or STA 1206) identified in NDPA frame 1210 unless the BFRP Trigger frame is in the same TXOP as the EHT TB sounding sequence. The STAs identified in NDPA frame 1210 may be the same as the STAs identified in trigger frame(s) in the same TXOP.

AP 1202, as an EHT beamformer, may set all the bits of a "Feedback Segment Retransmission Bitmap" field of (e.g., BFRP) trigger frame 1214 to 1s. (BFRP) trigger frame 1214 may contain one or more User Info fields, each of which identifies an EHT beamformee (e.g., STA 1204 or STA 1206).

A STA Info field in NDPA frame 1210 may indicate the subcarrier grouping, Ng, codebook size, and the quantity/number of columns, Nc, to be used by the EHT beamformee identified by the STA Info field for the generation of the SU or MU feedback. The STA Info field in NDPA frame 1210 may indicate the subcarrier grouping, Ng, codebook size, and the quantity/number of columns, Nc, to be used by the EHT beamformee identified by the STA Info field for the generation of the SU or MU feedback, for example, if NDPA frame 1210 solicits SU or MU feedback. A STA Info field in NDPA frame 900 may indicate the Nc to be used by the EHT beamformee identified by the STA Info field for the generation of the CQI feedback. The STA Info field in NDPA frame 900 may indicate the Nc to be used by the EHT beamformee identified by the STA Info field for the generation of the CQI feedback, for example, if NDPA frame 1210 solicits CQI feedback,

STA 1204/1206 may generate an EHT CQI report for CQI feedback with Nc determined by AP 1202. STA 1204/1206 may generate an EHT CQI report for CQI feedback with Nc determined by AP 1202, for example, if STA 1204 (or STA 1206) as an EHT beamformee receives NDPA frame 1210 soliciting CQI feedback.

STA 1204 (or STA 1206) may generate an EHT compressed beamforming report using the feedback type, Ng, codebook size, and Nc indicated in the STA Info field. STA 1204 (or STA 1206) may generate an EHT compressed beamforming report using the feedback type, Ng, codebook size, and Nc indicated in the STA Info field, for example, if STA 1204 (or STA 1206) as an EHT beamformee may receive NDPA frame 1210 with a STA Info field identifying STA 1204 (or STA 1206) soliciting SU or MU feedback.

STA 1204 (or STA 1206) may send (e.g., transmit) an EHT TB PPDU containing the EHT compressed beamforming/CQI report. STA 1204 (or STA 1206) may send (e.g., transmit) an EHT TB PPDU containing the EHT compressed beamforming/CQI report, for example, if STA 1204 (or STA 1206) as an EHT beamformee may receive (BFRP) trigger frame 1214 with a matching User Info field. AP 1202 may send (e.g., transmit) NDPA frame 1210 with a TA field set to a sent (e.g., transmitted) BSSID, and STA 1204 (or STA 1206) may be a non-AP STA associated with an AP corresponding to a non-sent (e.g., transmitted) BSSID that supports receiving control frames with TA fields set to the sent (e.g., transmitted) BSSID. The EHT compressed beamforming/CQI report sent by STA 1204 (or STA 1206) in response may include an RA field set to a MAC address of AP 1202.

The EHT compressed beamforming/CQI report may be split into up to eight feedback segments. The EHT compressed beamforming/CQI report may be split into up to eight feedback segments, for example, if an EHT compressed beamforming/CQI report solicited by AP 1202 would result in a feedback frame (e.g., 1216 or 1218) that exceeds 11454 octets in length. Each feedback segment may be included in a separate feedback frame and may contain successive portions of the EHT compressed beamforming/CQI report. Feedback segments may be of equal length except the last feedback segment, which may be shorter. Each feedback frame that includes a feedback segment that is not the last feedback segment may have a length of 11454 octets. Each feedback segment may be identified by the value of the "Remaining Feedback Segments" subfield and the "First Feedback Segment" subfield in an EHT MIMO Control field of the feedback frame that includes the feedback segment. The other non-reserved subfields of the EHT MIMO Control field may be the same for all feedback segments. Feedback frames may be sent in an A-MPDU contained in a single PPDU and may be included in the A-MPDU in descending order based on values of the "Remaining Feedback Segments" subfield.

AP 1202 may solicit all possible feedback segments by setting to 1 all of the bits of the "Feedback Segment Retransmission Bitmap" subfield of the User Info field (of trigger frame 1224) identifying the EHT beamformee. AP 1202 may solicit all possible feedback segments by setting to 1 all of the bits of the "Feedback Segment Retransmission Bitmap" subfield of the User Info field (of trigger frame 1224) identifying the EHT beamformee, for example, if AP 1202 as an EHT beamformer sends (e.g., transmits) (BFRP) trigger frame 1214 to retrieve an EHT compressed beamforming/CQI report from an EHT beamformee (e.g., STA 1204 or STA 1206),

AP 1202 may not send (e.g., transmit) a further BFRP Trigger frame to request retransmission of the feedback segments. Instead, AP 1202 may repeat the entire EHT sounding sequence. AP 1202 may not send (e.g., transmit) a further BFRP Trigger frame to request retransmission of the feedback segments. Instead, AP 1202 may repeat the entire EHT sounding sequence, for example, if AP 1202 as an EHT beamformer fails to receive some or all of the feedback segments of the EHT compressed beamforming/CQI report from an EHT beamformee (e.g., STA 1204 or STA 1206).

Precorrection of time, frequency, sampling clock, and power (in the case of a High Efficiency (HE) TB PPDU or extremely high throughput (EHT) TB PPDU) by STAs 1204 and 1206 may be necessary to mitigate synchronization and interference issues at AP 1202. Precorrection of time, frequency, sampling clock, and power (in the case of a High Efficiency (HE) TB PPDU or extremely high throughput (EHT) TB PPDU) by STAs 1204 and 1206 may be necessary to mitigate synchronization and interference issues at AP 1202, for example, if feedback frames 1216 and 1218 (e.g., TB PPDUs carrying feedback frames 1216 and 1218) are sent (e.g., transmitted) by STAs 1204 and 1206 simultaneously based on (e.g., in response to) trigger frame 1214. Specifically, frequency and sampling clock precorrections may be needed to prevent inter-carrier interference. Power precorrection may be necessary to control interference between the TB PPDUs carrying feedback frames 1216 and 1218.

Trigger frame 1214 may include in a User Info field an uplink (UL) Target Receive Power subfield that indicates whether a STA among STAs 1204 and 1206 is to send (e.g., transmit) TB PPDUs carrying feedback frames 1216 and/or 1218 at a maximum transmit power. The maximum transmit power may correspond to the STA's maximum transmit power for the assigned HE-MCS. The respective STA may send (e.g., transmit) the TB PPDU carrying feedback frames 1216 or 1218 at the maximum transmit power The respective STA may send (e.g., transmit) the TB PPDU carrying feedback frames 1216 or 1218 at the maximum transmit power, for example, if the UL Target Receive Power subfield indicates that the maximum transmit power is to be used. Otherwise, the STA may calculate the transmit power, $Tx_{pwr}^{STA}$, of the TB PPDU for the assigned HE-MCS using the equation:

$$Tx_{pwr}^{STA} = PL_{DL} + TargetRx_{pwr}$$

where $PL_{DL}$ is the downlink pathloss and $TargetRx_{pwr}$ is the expected receive signal power, in units of dBm, as indicated by the UL Target Receive Power subfield in the User Info field of trigger frame 1214. The respective STA may take into account the beamforming gain in calculating the transmit power. The respective STA may take into account the beamforming gain in calculating the transmit power, for example, if STA 1204 and/or STA 1206 applies beamforming to the TB PPDU carrying feedback frame 1216 and/or 1218.

STA 1204 and/or STA 1206 may compute $PL_{DL}$ using the equation:

$$PL_{DL} = Tx_{pwr}^{AP} - Rx_{pwr}$$

where $Tx_{pwr}^{AP}$ is the AP's transmit power, in units of dBm/20 MHz, as indicated by an AP Tx Power subfield of a Common Info field of trigger frame 1214 and $Rx_{pwr}$ is the receive signal power, in units of dBm/20MHz, of trigger frame 1214 at an antenna connector of the STA. $Rx_{pwr}$ may be an average of the receive signal power over the antennas on which the average $PL_{DL}$ is being computed.

An AP and an associated STA tuned to the same carrier frequency may have errors in their generated carrier frequencies in reference to the ideal carrier frequency, due to the finite accuracy of clock generating circuits of an AP and a STA. The AP may observe a baseband signal whose center frequency has an offset (i.e. carrier frequency offset or CFO) from the DC subcarrier. The AP may observe a baseband signal whose center frequency has an offset (i.e. carrier frequency offset or CFO) from the DC subcarrier, for example, if an AP receives a TB PPDU as in example 1200. An AP receiving the symbols of a TB PPDU sampled using its own clock may observe that the TB PPDU signal is generated at a clock offset (i.e. symbol clock offset or SCO) from its own sampling clock. Both SCO and CFO may result in receive errors when not properly mitigated. A STA may compensate for carrier frequency offset (CFO) error and symbol clock error with respect to trigger frame 1214 in order to limit the effects of CFO and SCO. A STA may compensate for carrier frequency offset (CFO) error and symbol clock error with respect to trigger frame 1214 in order to limit the effects of CFO and SCO, for example, if the TB PPDU carrying feedback frame 1216 and/or 1218 is a TB PPDU or a non-HT or non-HT duplicate PPDU with the TXVECTOR parameter TRIGGER_RESPONDING set to true. The absolute value of residual CFO error with respect to trigger frame 1214 after compensation may not exceed the following levels when measured at the 10% point of a complementary cumulative distribution function (CCDF) of CFO errors in Additive White Gaussian Noise (AWGN) at a received power of -60 dBm in the primary 20 MHz channel: 350 Hz for the data subcarriers of a TB PPDU; 2 kHz for a non-HT PPDU or non-HT duplicate PPDU. The residual CFO error measurement on an HE TB PPDU may be made after the HE-SIG-A field. The residual CFO error measurement on an EHT TB PPDU shall be made after the U-SIG field. The residual CFO error measurement on a non-HT or non-HT duplicate PPDU may be made after the L-STF field. The symbol clock error may be compensated by the same ppm amount as the CFO error.

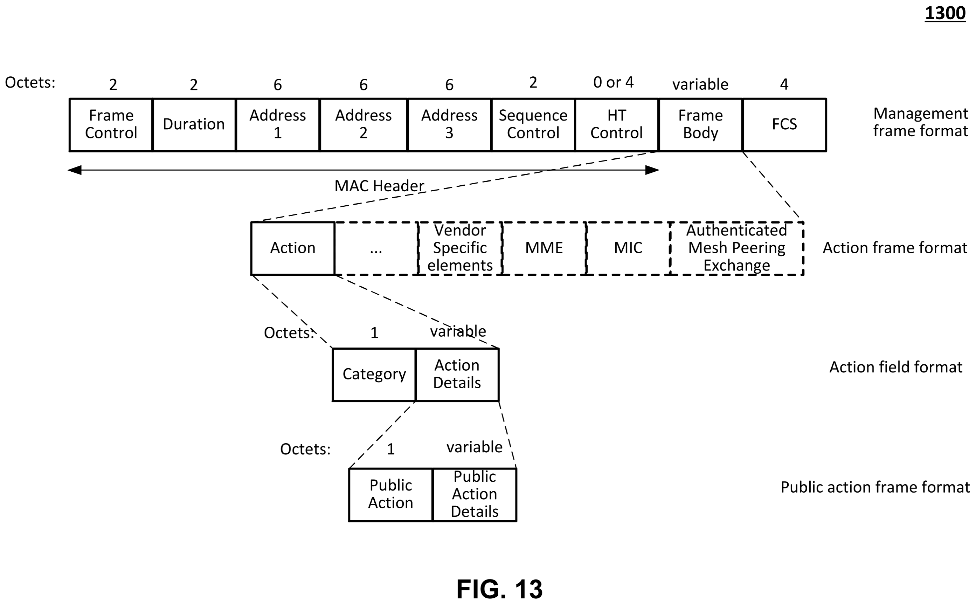

FIG. 13 shows an example management frame 1300 which may be used as an action frame. Management frame 1300 may include a MAC header, a variable length frame body, and a frame check sequence (FCS). The MAC header may include a frame control field, a duration field, an address 1 field, an address 2 field, an address 3 field, a sequence control field, and an optional HT control field. The presence of the HT control field may be determined by the setting of a +HTC subfield of the frame control field.

The frame body of management frame, as shown in FIG. 13, may include an action field, vendor specific elements, management message integrity code element (MME), message integrity code (MIC), and an authenticated mesh peering exchange element. The frame body of management frame, as shown in FIG. 13, may include an action field, vendor specific elements, management message integrity code element (MME), message integrity code (MIC), and an authenticated mesh peering exchange element, for example, if used as an action frame.

The action field may include a category field and an action details field. The action field may provide a mechanism for specifying extended management actions. The category field may indicate a category of the action frame. The action details field may contain the details of the action requested by the action frame. For example, the action frame may be a public action frame. The action details field, as shown in FIG. 13 in the public action frame format, may include a public action field, in the octet immediately after the category field, followed by a variable length public action details field.

One or more vendor specific elements may be optionally present. These vendor specific elements may be absent. These vendor specific elements may be absent, for example, if the category subfield of the Action field is vendor-specific.

The MME may be present, for example, if management frame protection is negotiated, the frame is a group addressed robust Action frame, and (MBSS only) the category of the action frame does not support group addressed privacy as indicated by category values. The MME may not be present, for example, if management frame protection is not negotiated, the frame is not a group addressed robust Action frame, and/or (MBSS only) the category of the action frame supports group addressed privacy as indicated by category values.

The MIC element may be present in a self-protected action frame, for example, if a shared pairwise master key (PMK) exists between the sender and recipient of this frame. The MIC element may not be present in a self-protected action frame, for example, if a shared pairwise master key (PMK) does not exist between the sender and recipient of this frame.

The authenticated mesh peering exchange element may be present in a self-protected action frame, for example, if a shared PMK exists between the sender and recipient of this frame. The authenticated mesh peering exchange element may not be present in a self-protected action frame, for example, if a shared PMK does not exist between the sender and recipient of this frame

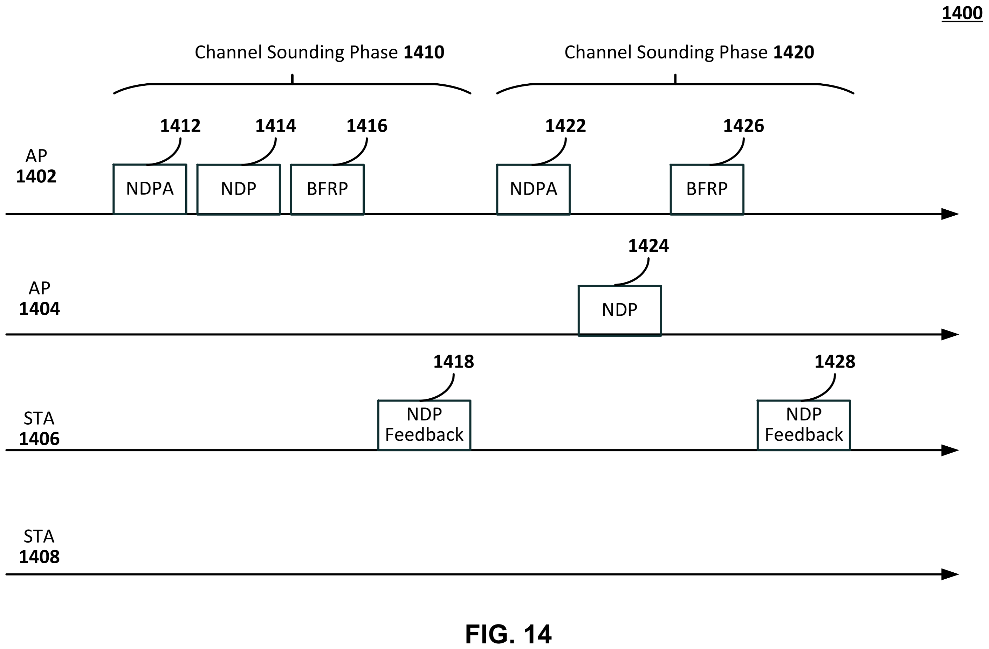

FIG. 14 shows an example 1400 of sequential NDP sounding. Example 1400 may include two APs 1402 and 1404. Example 1400 may further include a STA 1406 associated with AP 1402 and a STA 1408 associated with AP 1404. APs 1402 and 1404 may form a multi-AP group. AP 1402 in example 1400 may wish to perform a coordinated beamforming procedure or coordinated spatial reuse procedure with AP 1404. AP 1402 may be the AP coordinating/controlling the coordinated beamforming procedure. AP 1402 may be referred to as a master/-sharing AP, and AP 1404 may be referred to as a slave/-shared AP. Example 1400 may include a channel sounding phase 1410 and a channel sounding phase 1420. Example 1400 may be performed by AP 1402 and AP 1404 periodically or as necessary, to collect the necessary channel feedback for a coordinated beamforming or coordinated spatial reuse operation.

AP 1402 in channel sounding phase 1410 may use TB sounding (e.g., as discussed herein in relation to example 1200 shown in FIG. 12) to acquire CSI of a channel between AP 1402 and STA 1406. For example, AP 1402 may send (e.g., transmit) an NDPA frame 1412. NDPA frame 1412 may be an example of NDPA frame 900 described herein and may be used for TB sounding like NDPA frame 1210 shown in FIG. 12. NDPA frame 1412 may be addressed to STAs associated with sending (e.g., transmitting) AP 1402 (e.g., NDPA frame 1412 is addressed to STA 1406 associated with AP 1402).

AP 1402 may send (e.g., transmit) an NDP 1414 after sending (e.g., transmitting) NDPA frame 1412. NDP 1414 may be an EHT sounding NDP, like NDP 1212 described in example 1200. STA 1406 may determine an estimate of the channel (CSI) between AP 1402 and STA 1406 based on NDP 1414. AP 1402 may send (e.g., transmit) a trigger frame 1416 after sending (e.g., transmitting) NDP 1414. Trigger frame 1416 may be a BFRP frame, corresponding to trigger frame 1214 in example 1200, and may address STA 1406 as a beamformee.

Example 1400, like example 1200, may be discussed as an EHT beamformer. Example 1400, and other EHT examples described throughout, may use UHR beamforming by replacing EHT frame(s) with corresponding UHR frame(s).

STA 1406 may send (e.g., transmit) a feedback frame 1418 after receiving trigger frame 1416. Feedback frame 1418, like feedback frames 1216 and 1218 in example 1200, may be carried in a TB PPDU, and may include one or more beamforming reports with CSI information for the channel between STA 1406 and AP 1402 (e.g., a compressed beamforming report, an MU exclusive beamforming report, or a CQI report). AP 1402 may receive feedback frame 1418, and may use the CSI information for the channel between STA 1406 and AP 1402 for coordinated beamforming with AP 1404 to STAs 1406 and 1408. In the coordinated beamforming, AP 1402 may send (e.g., transmit) a beamformed transmission to STA 1406 (with nulling towards STA 1408) and AP 1404 may send (e.g., transmit) a beamformed transmission to STA 1408 (with nulling towards STA 1406).

During channel sounding phase 1420, AP 1402 and AP 1404 may use TB sounding to acquire CSI of a channel between AP 1404 and STA 1406. For example, AP 1402 may send (e.g., transmit) an NDPA frame 1422. NDPA frame 1422 may be an example of NDPA frame 900 described herein, and may be used for TB sounding like NDPA frame 1210 shown in FIG. 12.

NDPA frame 1422, as in channel sounding phase 1410, may be addressed to STAs associated with AP 1402 (e.g., STA 1406). AP 1404 may also receive NDPA frame 1422. AP 1404 may send (e.g., transmit) an NDP 1424 (e.g., to STA 1406 or as a broadcast), after receiving NDPA frame 1422 from AP 1402. AP 1402 and AP 1404 may negotiate in advance that AP 1404 uses NDPA frames from AP 1402 to trigger transmission of an NDP from AP 1404 to STA 1406 (e.g., an overlapping basic service set (OBSS) STA for AP 1404). An OBSS STA for an AP may be a STA that is a member of a BSS operating on the same channel as the AP's BSS and within (either partly or wholly) the AP's basic service area (BSA). AP 1402 may include an indication in NDPA frame 1422 that AP 1404 should trigger transmission of NDP 1424 from AP 1404 to STA 1406.

NDP 1424 may be an EHT sounding NDP, like NDP 1414 and NDP 1212 described in example 1200. STA 1406 may determine an estimate of the channel (CSI) between AP 1404 and STA 1406 based on NDP 1424. AP 1402 may send (e.g., transmit) a trigger frame 1426 after AP 1404 sends (e.g., transmits) NDP 1424. Trigger frame 1426, like trigger frame 1416, may be a BFRP frame, corresponding to trigger frame 1214 in example 1200, and may address STA 1406 as a beamformee.

STA 1406 may send (e.g., transmit) a feedback frame 1428 after receiving trigger frame 1426. Feedback frame 1428, like feedback frame 1418 and feedback frames 1216 and 1218 in example 1200, may be carried in a TB PPDU, and may include one or more beamforming reports. The beamforming reports, based on STA 1406 receiving NDP 1424 from AP 1404, may include CSI information for the channel between STA 1406 and AP 1404 (e.g., a compressed beamforming report, an MU exclusive beamforming report, or a CQI report). AP 1404 may receive feedback frame 1428 from STA 1406 and may use the CSI information for the channel between STA 1406 and AP 1404 for coordinated beamforming with AP 1402 to STAs 1406 and 1408.

AP 1404 may repeat the same procedure for its associated STAs (e.g., STA 1408), after AP 1402 completes channel sounding phase 1410 and channel sounding phase 1420 for its associated STAs (e.g., STA 1406). For example, AP 1404 may use a third and fourth channel sounding phase (not pictured), analogous to the shown channel sounding phases 1410 and 1420, to acquire CSI for a channel between AP 1404 and STA 1408, and for a channel between AP 1402 and STA 1408. AP 1402 and AP 1404 may use this CSI information for the coordinated beamforming to STAs 1406 and 1408.

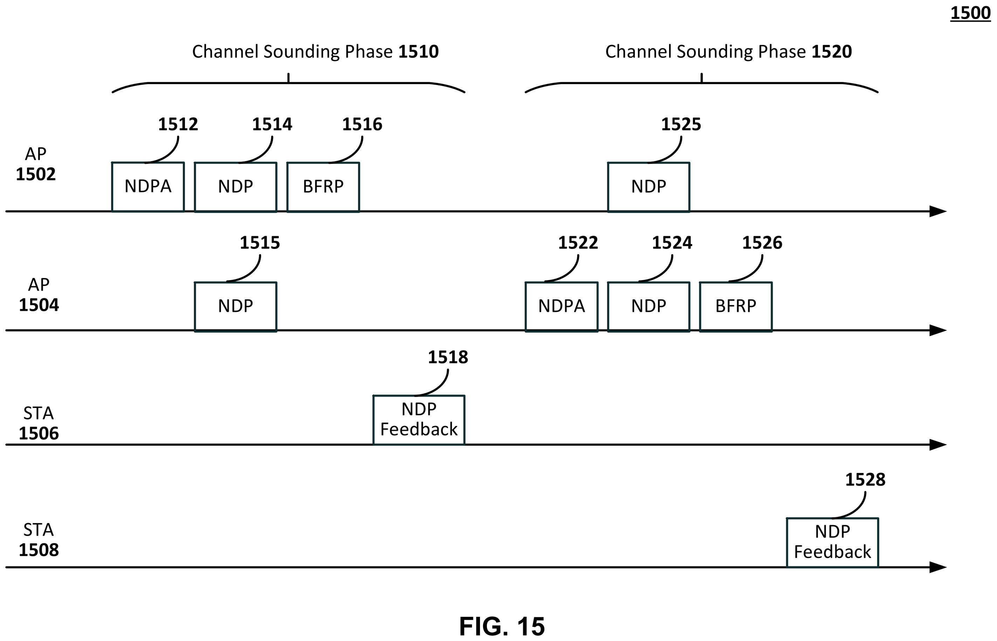

FIG. 15 shows an example 1500 of joint NDP sounding. Example 1500 may include two APs 1502 and 1504. Example 1500 may further include a STA 1506 associated with AP 1502, and a STA 1508 associated with AP 1504. APs 1502 and 1504 may form a multi-AP group. AP 1502 in example 1500 may wish to perform a coordinated beamforming procedure or coordinated spatial reuse procedure with AP 1504. AP 1502 may be the AP coordinating/controlling the coordinated beamforming procedure. AP 1502 may be referred to as a master/-sharing AP, and AP 1504 may be referred to as a slave/-shared AP. Example 1500 may be performed by AP 1502 and AP 1504 periodically or as necessary, to collect the necessary channel feedback for a coordinated beamforming or coordinated spatial reuse operation.

Example 1500 as shown may include a channel sounding phase 1510 and a channel sounding phase 1520. AP 1502 and AP 1504 in channel sounding phase 1510 may perform both sounding phases discussed in example 1400, simultaneously, for STA 1506. AP 1502 and AP 1504 in channel sounding phase 1520 may perform both sounding phases discussed in example 1400, simultaneously, for STA 1508.

AP 1502 in channel sounding phase 1510 may send (e.g., transmit) an NDPA frame 1512. NDPA frame 1512 may be an example of NDPA frame 900 described herein, and may be used for TB sounding like NDPA frame 1210 shown in FIG. 12. NDPA frame 1512 may be addressed to STAs associated with sending (e.g., transmitting) AP 1502 (e.g., NDPA frame 1512 is addressed to STA 1506 associated with AP 1502).

AP 1504 may receive NDPA frame 1512. AP 1502 and AP 1504 may negotiate in advance that AP 1504 uses NDPA frames from AP 1502 to trigger transmission of an NDP from AP 1504 to STA 1506. For example, AP 1502 may include an indication in NDPA frame 1512 that AP 1504 may trigger transmission of NDP 1515 from AP 1504 to STA 1506 (e.g., after a SIFS duration). AP 1502 may send (e.g., transmit) NDP 1514 to STA 1506, simultaneous with AP 1504 sending (e.g., transmitting) NDP 1515 to STA 1506. AP 1502 may send (e.g., transmit) NDP 1514 after a SIFS duration following transmission of NDPA frame 1512.

NDP 1514 and NDP 1515 may be sent (e.g., transmitted) orthogonally in the code domain to avoid collision. For example, NDP 1514 and NDP 1515 may use orthogonal rows of a P matrix used in MIMO LTFs. The use orthogonal rows of the P matrix may allow STA 1506 to simultaneously estimate CSI for a channel between STA 1506 and AP 1502 (e.g., based on NDP 1514), and for a channel between STA 1506 and AP 1504 (e.g., based on NDP 1515).

AP 1502 may send (e.g., transmit) a trigger frame 1516 after sending (e.g., transmitting) NDP 1514. Trigger frame 1516 may be a BFRP frame, corresponding to trigger frame 1214 in example 1200, and may address STA 1506 as a beamformee.

STA 1506 may send (e.g., transmit) a feedback frame 1518 after receiving trigger frame 1516. Feedback frame 1518, like feedback frames 1216 and 1218 in example 1200, may be carried in a TB PPDU, and may include one or more beamforming reports with CSI information (e.g., a compressed beamforming report, an MU exclusive beamforming report, or a CQI report). Feedback frame 1518 may include CSI information for both the channel between STA 1506 and AP 1502 (e.g., based on NDP 1514), and for the channel between STA 1506 and AP 1504 (e.g., based on NDP 1515). The feedback included in feedback frame 1518 may be based on large V-based feedback where the eigen-vectors span the antennas across both AP 1502 and AP 1504.

AP 1502 may receive feedback frame 1518 from STA 1506, and may use the CSI information for the channel between STA 1506 and AP 1502 for coordinated beamforming with AP 1504 to STAs 1506 and 1508. Similarly, AP 1504 may also receive feedback frame 1518 from STA 1506, and may use the CSI information for the channel between STA 1506 and AP 1504 for the coordinated beamforming with AP 1502 to STAs 1506 and 1508. AP 1502 in the coordinated beamforming may send (e.g., transmit) a beamformed transmission to STA 1506 (with nulling towards STA 1508), and AP 1504 may send (e.g., transmit) a beamformed transmission to STA 1508 (with nulling towards STA 1506).

Channel sounding phase 1510 may show joint sounding for STA 1506 associated with AP 1502. Channel sounding phase 1520 may correspond to channel sounding phase 1510, but STA 1508 may be associated with AP 1504, and STA 1506 may be associated with AP 1502. AP 1504 may send (e.g., transmit) an NDPA 1522, and AP 1502 and AP 1504 may simultaneously send (e.g., transmit) an NDP 1524 and an NDP 1525 (e.g., using orthogonal transmission in the code domain to avoid collision, as discussed herein for NDP 1514 and NDP 1515 in channel sounding phase 1510). AP 1504 may send (e.g., transmit) a trigger frame 1526 (e.g., a BFRP frame, like trigger frame 1516) to STA 1508.

STA 1508 may send (e.g., transmit) a feedback frame 1528 with CSI information for both the channel between STA 1508 and AP 1504 (e.g., based on NDP 1524), and for the channel between STA 1508 and AP 1502 (e.g., based on NDP 1525), after receiving trigger frame 1526. AP 1504 may receive feedback frame 1528, and may use the CSI information for the channel between STA 1508 and AP 1504 for coordinated beamforming with AP 1502 to STAs 1506 and 1508. AP 1502 may similarly receive feedback frame 1528 from STA 1508, and may use the CSI information for the channel between STA 1508 and AP 1502 for the coordinated beamforming to STAs 1506 and 1508.

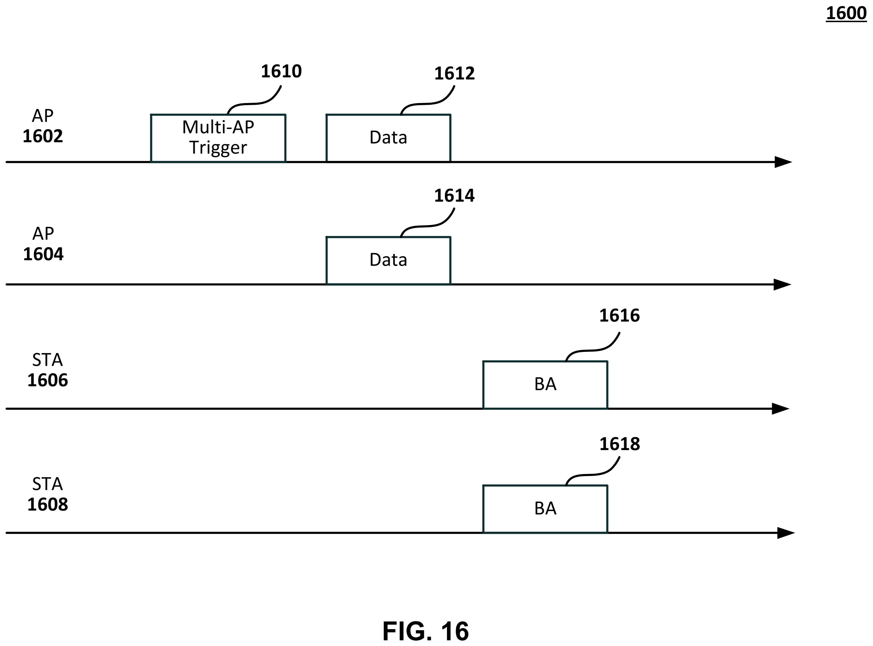

FIG. 16 shows an example 1600 of a multi-AP downlink data transmission phase. Example 1600 may be an example of multi-AP data transmission phase 616. Example 1600 as shown in FIG. 16 may include a master AP 1602 and a slave AP 1604 of a multi-AP group. Example 1600 may further include a STA 1606 associated with AP 1602, and a STA 1608 associated with AP 1604.

Example 1600 as shown in FIG. 16 may include frame exchanges to enable master AP 1602 to coordinate with slave AP 1604 to perform specific multi-AP transmission schemes with their associated STAs 1606 and 1608 respectively. The multi-AP transmission schemes may include COFDMA, CTDMA, CSR, CBF, JT/JR, or a combination of two or more of the aforementioned schemes.

Master AP 1602 as shown in FIG. 16 may begin example 1600 by sending (e.g., transmitting) a frame 1610 to AP 1604. Frame 1610 may include information related to AP 1604 (e.g., an identifier of AP 1604), synchronization information, information related to a specific multi-AP transmission scheme to be used, and/or information related to a resource unit (RU) for use by AP 1604 to acknowledge frame 1610. Frame 1610 may comprise a control frame. For example, frame 1610 may comprise a multi-AP trigger frame.

Slave AP 1604 may receive frame 1610 and may use the synchronization information to synchronize with master AP 1602. APs 1602 and 1604 may subsequently perform data transmission to their associated STAs 1606 and 1608 respectively. AP 1602 may send (e.g., transmit) a data frame 1612 to its associated STA 1606, and AP 1604 may send (e.g., transmit) a data frame 1614 to its associated STA 1608. APs 1602 and 1604 may send (e.g., transmit) frames 1612 and 1614 respectively to STAs in different BSSs, depending on the multi-AP transmission scheme being used. AP 1602 may send (e.g., transmit) frame 1612 to STA 1608 associated with slave AP 1604, and AP 1604 may send (e.g., transmit) frame 1614 to STA 1608 associated with AP 1604. AP 1602 may send (e.g., transmit) frame 1612 to STA 1608 associated with slave AP 1604, and AP 1604 may send (e.g., transmit) frame 1614 to STA 1608 associated with AP 1604, for example, if the multi-AP transmission scheme is JT/JR. The resources for sending (e.g., transmitting) and receiving frames 1612 and 1614 may depend on the specific multi-AP transmission scheme adopted.

STAs 1606 and 1608 may acknowledge frames 1612 and 1614 respectively. For example, STA 1606 may send (e.g., transmit) a frame 1616 to AP 1602, and STA 1608 may send (e.g., transmit) a frame 1618 to AP 1604. Frames 1616 and 1618 may comprise block ack (BA) frames. STAs 1606 and 1608 may send (e.g., transmit) frames 1616 and 1618 to APs in different BSSs. STAs 1606 and 1608 may send (e.g., transmit) frames 1616 and 1618 to APs in different BSSs, for example, if required by the used multi-AP transmission scheme. STA 1606 may send (e.g., transmit) frame 1616 to AP 1604, and STA 1608 may send (e.g., transmit) frame 1618 to AP 1602. STA 1606 may send (e.g., transmit) frame 1616 to AP 1604, and STA 1608 may send (e.g., transmit) frame 1618 to AP 1602, for example, if the multi-AP transmission scheme is JT/JR. The resources for sending (e.g., transmitting) and receiving frames 1616 and 1618 may depend on the specific multi-AP transmission scheme adopted.

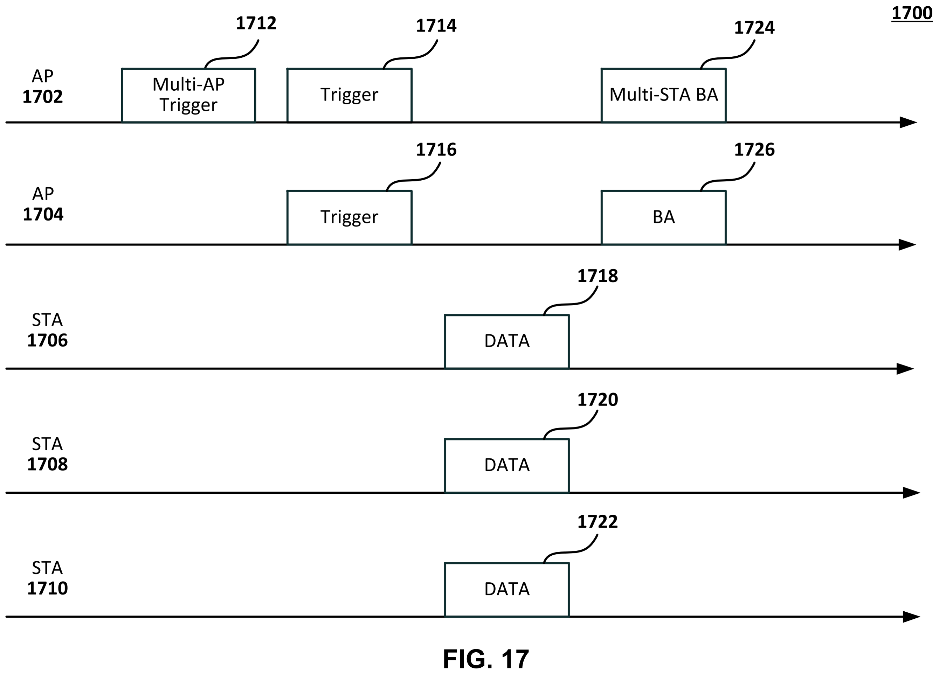

FIG. 17 shows an example 1700 of a multi-AP uplink data transmission phase. Example 1700 may be an example of multi-AP data transmission phase 616. Example 1700 as shown in FIG. 17 may include a master AP 1702 and a slave AP 1704 of a multi-AP group. Example 1700 may further include STAs 1706 and 1708 associated with AP 1702, and a STA 1710 associated with AP 1704.

Example 1700 as shown in FIG. 17 may include frame exchanges to enable master AP 1702 to coordinate with slave AP 1704 to perform specific multi-AP transmission schemes with STAs 1706, 1708, and 1710. The multi-AP transmission schemes may include COFDMA, CTDMA, CSR, CBF, JT/JR, or a combination of two or more of the aforementioned schemes.

Master AP 1702 as shown in FIG. 17 may begin example 1700 by sending (e.g., transmitting) a frame 1712 to AP 1704. Frame 1712 may include information related to AP 1704 (e.g., an identifier of AP 1704), synchronization information, information related to a specific multi-AP transmission scheme to be used, and/or information related to an RU for use by AP 1704 to acknowledge frame 1712. Frame 1712 may comprise a control frame. For example, frame 1712 may comprise a multi-AP trigger frame.

Slave AP 1704 may receive frame 1712 and may use the synchronization information to synchronize with master AP 1702. APs 1702 and 1704 may subsequently solicit uplink data transmissions from their associated STAs 1706, 1708 and 1710 using trigger frames. AP 1702 may send (e.g., transmit) a trigger frame 1714 to its associated STAs 1706 and 1708, and AP 1704 may send (e.g., transmit) a trigger frame 1716 to its associated STA 1710. APs 1702 and 1704, depending on the multi-AP transmission scheme being used, may also send (e.g., transmit) frames 1714 and 1716 respectively to STAs in different BSSs. AP 1702 may send (e.g., transmit) frame 1714 to STA 1710 associated with slave AP 1704, and AP 1704 may send (e.g., transmit) frame 1716 to STAs 1706 and 1708 associated with AP 1702. AP 1702 may send (e.g., transmit) frame 1714 to STA 1710 associated with slave AP 1704, and AP 1704 may send (e.g., transmit) frame 1716 to STAs 1706 and 1708 associated with AP 1702, for example, if the multi-AP transmission scheme is JT/JR. The resources for sending (e.g., transmitting) and receiving frames 1714 and 1716 may depend on the specific multi-AP transmission scheme adopted.

STAs 1706 and 1708 may respond to frame 1714, and STA 1710 may respond to frame 1716. STAs 1706 and 1708 may send (e.g., transmit) frames 1718 and 1720 respectively to AP 1702. STAs 1706 and 1708 may send (e.g., transmit) frames 1718 and 1720 respectively to AP 1702, for example, if STA 1710 may send (e.g., transmit) a frame 1722 to AP 1704. Frames 1718, 1720, and/or 1722 may be sent (e.g., transmitted) simultaneously. Frames 1718, 1720, and 1722 may comprise data frames or null data frames. STAs 1706, 1708, and 1710 may also send (e.g., transmit) frames 1718, 1720, and 1722 respectively to APs in different BSSs. STAs 1706, 1708, and 1710 may also send (e.g., transmit) frames 1718, 1720, and 1722 respectively to APs in different BSSs. STAs 1706, 1708, and 1710 may also send (e.g., transmit) frames 1718, 1720, and 1722 respectively to APs in different BSSs, for example, if required by the used multi-AP transmission scheme. STAs 1706 and 1708 may also send (e.g., transmit) respective frames 1718 and 1720 to AP 1704, and STA 1710 may also send (e.g., transmit) frame 1722 to AP 1702. STAs 1706 and 1708 may also send (e.g., transmit) respective frames 1718 and 1720 to AP 1704, and STA 1710 may also send (e.g., transmit) frame 1722 to AP 1702, for example, if the multi-AP transmission scheme is JT/JR. The resources for sending (e.g., transmitting) and receiving frames 1718, 1720, and 1722 may depend on the specific multi-AP transmission scheme adopted. AP 1702 may acknowledge frames 1718 and 1720 by sending (e.g., transmitting) a multi-STA BA frame 1724 to STAs 1706 and 1708. AP 1704 may acknowledge frame 1722 by sending (e.g., transmitting) a BA frame 1726 to STA 1710.

Coordinated beamforming may be a transmission strategy allowing multiple transmission points (e.g., stations and/or access points) to coordinate beam patterns. By coordinating beam patterns, each wireless device may receive strong desired signals, which may help to reduce inter-cell interference. Coordinated beamforming sounding may be performed for estimating channel coefficients between access points and stations in a coordinated beamforming transmission. Each access point may initiate an intra-BSS channel sounding phase and a cross-BSS channel sounding phase. The intra-BSS coordinated beamforming sounding phase may be used to perform sounding of the channel from a first access point to a station. The cross-BSS coordinated beamforming sounding phase may be used to perform sounding of the channel from a second access point to the station. In at least some examples, the second access point may not hear a feedback message from the station in the cross-BSS coordinated beamforming sounding phase, which may cause the second access point being non-responsive to coordinated beamforming initiated by the first access point. This may result in a resource waste for both the first access point and the station. To address the described problem, the second access point may send a status of the feedback message to the first access point. The first access point, based on the status, may initiate the coordinated beamforming or perform a remedial procedure.

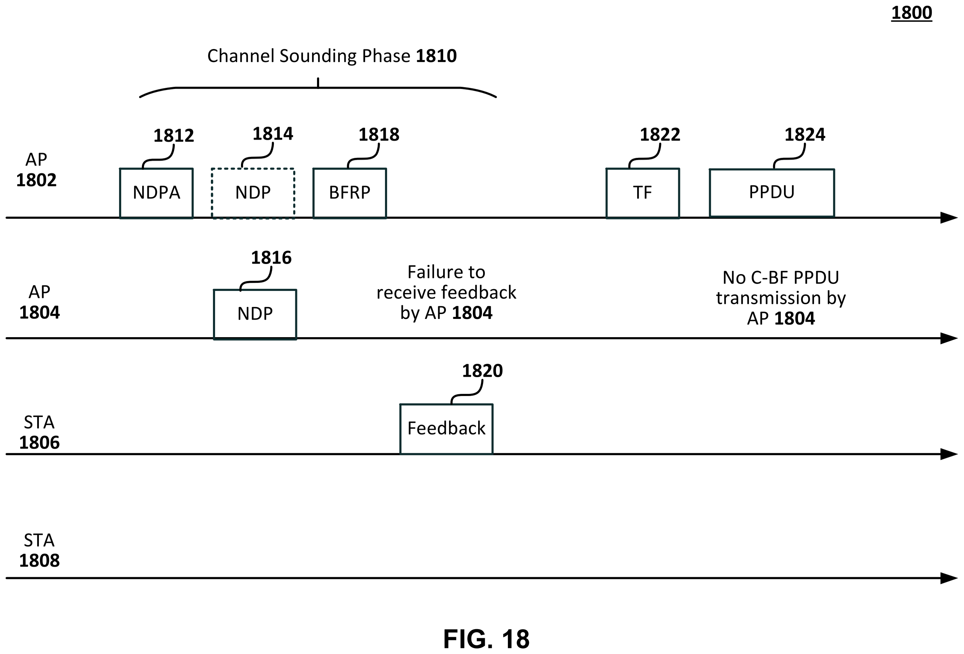

FIG. 18 shows an example 1800 that indicates a problem that may arise in a coordinated beamforming procedure using at least some NDP sounding procedures, such as the sequential NDP sounding procedure shown in FIG. 14 and the joint NDP sounding procedure shown in FIG. 15. As shown in FIG. 18, example 1800 includes APs 1802 and 1804 and STAs 1806 and 1808. STA 1806 may be associated with AP 1802 and STA 1808 may be associated with AP 1804. APs 1802 and 1804 may form a multi-AP group. In example 1800, AP 1802 may determine to perform a coordinated beamforming procedure with AP 1804 in a TXOP obtained by AP 1802. AP 1802 may be the AP coordinating/controlling the coordinated beamforming procedure. As such, AP 1802 may be referred to as a master/sharing AP, and AP 1804 may be referred to as a slave/shared AP.

Example 1800 as shown in FIG. 18 may begin with a channel sounding phase 1810. Channel sounding phase 1810 may correspond to the channel sounding phase 1420 of the sequential NDP sounding procedure shown in FIG. 14. Channel sounding phase 1810 may serve for STA 1806 to estimate a channel from AP 1804 to STA 1806 and to send (e.g., transmit) feedback with CSI for the channel from AP 1804 to STA 1806. Channel sounding phase 1810 may begin with AP 1802 sending (e.g., transmitting) to AP 1804 an NDPA frame 1812. AP 1804, based on (e.g., in response to) NDPA frame 1812, may send (e.g., transmit) an NDP 1816 (e.g., a SIFS after receiving NDPA frame 1812). STA 1806 may measure the channel from AP 1804 to STA 1806 based on NDP 1816 and may determine feedback comprising CSI for the channel based on the measurement. AP 1802 may send (e.g., transmit) to STA 1806 a BFRP frame 1818 soliciting the feedback, for example, after a SIFS following transmission of NDP 1816. STA 1806 may send (e.g., transmit) a frame 1820 comprising the feedback, based on (e.g., in response to) BFRP frame 1818.

Channel sounding phase 1810 may correspond to the channel sounding phase 1510 of the joint NDP sounding procedure shown in FIG. 15. Channel sounding phase 1810 may serve for STA 1806 to estimate both a first channel from AP 1802 to STA 1806 and a second channel from AP 1804 to STA 1806 and to send (e.g., transmit) feedback with CSI for both the first and second channels. Both APs 1802 and 1804 may send (e.g., transmit) respective NDPs 1814 and 1816, (e.g., a SIFS after NDPA frame 1812), after AP 1802 sends (e.g., transmits) NDPA frame 1812 described herein. NDPs 1814 and 1816 as discussed herein may be sent (e.g., transmitted) over orthogonal resources such that the NDPs do not interfere with each other. STA 1806 may measure the first channel from AP 1802 to STA 1806 based on NDP 1814 and determines first feedback comprising CSI for the first channel based on the measurement. STA 1806 may similarly measure the second channel from AP 1804 to STA 1806 based on NDP 1816 and may determine second feedback comprising CSI for the second channel based on the measurement. AP 1802 may send (e.g., transmit) to STA 1806 BFRP frame 1818 soliciting the first feedback and the second feedback, for example, subsequent to a SIFS after transmission of NDPs 1814 and 1816. STA 1806 may send (e.g., transmit) frame 1820 comprising the first feedback and the second feedback, based on (e.g., in response to) BFRP frame 1818.

AP 1804 must receive the feedback sent (e.g., transmitted) by STA 1806 to learn the channel from AP 1804 to STA 1806 and apply appropriate null beamforming towards STA 1806, as discussed herein, in order to perform the at least some coordinated beamforming procedures, such as the sequential NDP sounding procedure shown in FIG. 14 and the joint NDP sounding procedure shown in FIG. 15. As STA 1806 sends (e.g., transmits) frame 1820 to AP 1802 (based on/in response to BFRP frame 1818), AP 1804 must be able to "overhear" the feedback contained in frame 1820. That is, AP 1804 should receive frame 1820 with a sufficient signal strength to decode the feedback contained in frame 1820.

In at least some examples, the AP 1804 may not be able to participate in the coordinated beamforming procedure with AP 1802. AP 1804 may not be able to participate in the coordinated beamforming procedure with AP 1802, for example, if AP 1804 fails to receive/-decode the feedback as shown in example 1800. AP 1802 may send (e.g., transmit) to AP 1804 a trigger frame 1822 to initiate a coordinated beamforming transmission by APs 1802 and 1804 as shown in FIG. 18, after channel sounding phase 1810. AP 1804 may not join the coordinated beamforming procedure with AP 1802, based on not receiving the feedback in frame 1820. AP 1804, as shown in FIG. 18, may refrain from any PPDU transmission to STA 1808 together with AP 1802 sending (e.g., transmitting) a PPDU 1824 to STA 1806. The coordinated beamforming opportunity may thus be lost. For example (not shown in FIG. 18), AP 1804 may send (e.g., transmit) a PPDU to STA 1808 together with AP 1802 sending (e.g., transmitting) PPDU 1824 to STA 1806, and without regard to interference caused by the PPDU at STA 1806. The PPDU transmission by AP 1804 may thus interfere with the reception by STA 1806 of PPDU 1824 and may degrade reception performance at STA 1806. Communication performance (e.g., throughput, resource utilization efficiency, etc.) may be degraded.

Examples described herein may address the described problem of at least some technologies. A first AP may receive from a second AP a frame indicating a status of reception, by the second AP, of feedback sent (e.g., transmitted) by a first STA, where the feedback indicates CSI for a channel between the first STA and the second AP. The first AP may initiate a coordinated beamforming transmission with the second AP, based on the status of reception of the feedback. The first STA may be associated with the first AP. The first AP may initiate the coordinated beamforming transmission with the second AP based on the status of reception of the feedback indicating success of the second AP to receive/decode the feedback. The first AP may initiate/re-initiate a coordinated sounding procedure with the second AP based on the status of reception of the feedback indicating failure of the second AP to receive/decode the feedback. The first AP may send (e.g., transmit) to the second AP a frame indicating an acceptable receive interference level (ARIL) at the first STA of a PPDU to be sent (e.g., transmitted) by the second AP. The frame may further indicate that the second AP is to send (e.g., transmit) the PPDU based on the ARIL, based on the second AP not receiving the feedback sent (e.g., transmitted) by the first STA. The frame may further indicate that the second AP is to send (e.g., transmit) the PPDU based on the CSI, based on the second AP receiving the feedback sent (e.g., transmitted) by the first STA.

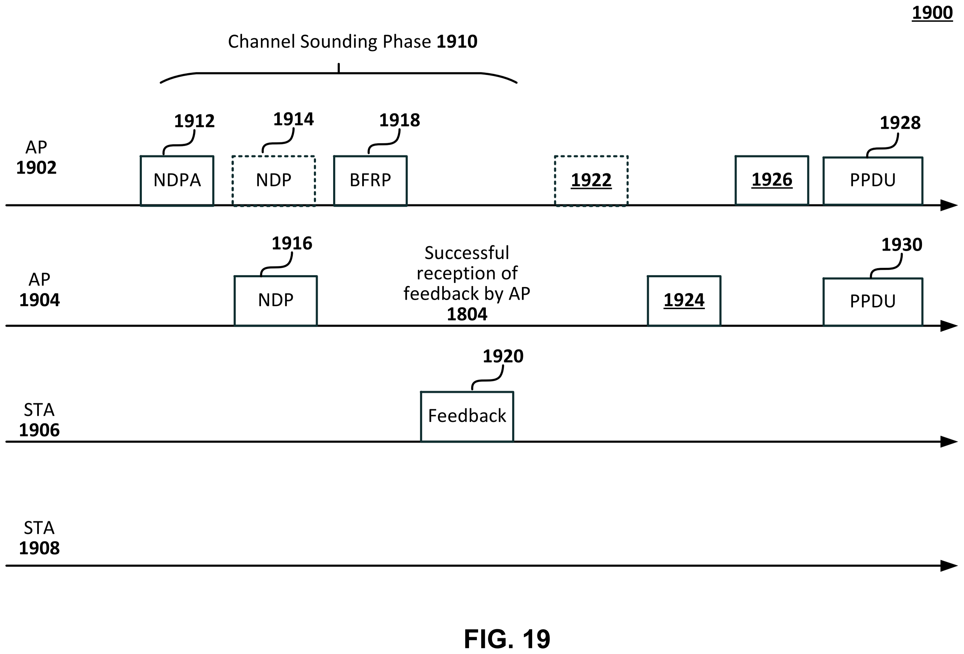

FIG. 19 shows an example 1900 of a coordinated beamforming procedure. Example 1900 may be provided for the purpose of illustration only and is not limiting. Example 1900 as shown in FIG. 19 may include AP 1902, AP 1904, STA 1906, and STA 1908. STA 1906 may be associated with AP 1902, and STA 1908 may be associated with AP 1904. APs 1902 and 1904 may form a multi-AP group. AP 1902, in example 1900, may wish to perform a coordinated beamforming procedure with AP 1904 in a TXOP obtained by AP 1902. AP 1902 may be the AP coordinating/controlling the coordinated beamforming procedure. AP 1902 may be referred to as a master/sharing AP, and AP 1904 may be referred to as a slave/shared AP. AP 1904 may be considered an overlapping basic service set (OBSS) AP relative to AP 1902 or STA 1906.

Example 1900 as shown in FIG. 19 may begin with a channel sounding phase 1910. Channel sounding phase 1910 may correspond to the channel sounding phase 1420 of the sequential NDP sounding procedure shown in FIG. 14. Channel sounding phase 1910 may serve for STA 1906 to estimate a first channel from AP 1904 to STA 1906 and to send (e.g., transmit) first feedback with CSI for the first channel from AP 1904 to STA 1906. The CSI may comprise at least one of: channel coefficients of the first channel; uncompressed beamforming feedback matrices computed based on the channel coefficients; and/or compressed beamforming feedback matrices computed based on the channel coefficients. Channel sounding phase 1910 may begin with AP 1902 sending (e.g., transmitting) to AP 1904 an NDPA frame 1912. AP 1904, based on (e.g., in response to) NDPA frame 1912, may send (e.g., transmit) an NDP (or a sounding PPDU) 1916, for example, a SIFS after receiving NDPA frame 1912. STA 1906 may measure the first channel from AP 1904 to STA 1906 based on NDP (or sounding PPDU) 1916 and may determine the first feedback comprising CSI for the first channel based on the measurement. STA 1906 may measure the first channel based on NDP 1916 based on/in response to (or after) STA 1906 receiving NDPA frame 1912. AP 1902 may send (e.g., transmit) to STA 1906 a BFRP frame 1918 soliciting the first feedback, for example, subsequent to a SIFS after transmission of NDP 1916. STA 1906 may send (e.g., transmit) a frame 1920 comprising the first feedback, based on (e.g., in response to) BFRP frame 1918.

Channel sounding phase 1910 may correspond to the channel sounding phase 1510 of the joint NDP sounding procedure shown in FIG. 15. Channel sounding phase 1910 may serve for STA 1906 to estimate both the first channel from AP 1904 to STA 1906 and a second channel from AP 1902 to STA 1906 and to send (e.g., transmit) feedback with CSI for both the first and second channels. Both APs 1902 and 1904 may send (e.g., transmit) respective NDPs (or sounding PPDUs) 1914 and 1916 (e.g., a SIFS after NDPA frame 1912) after AP 1902 sends (e.g., transmits) NDPA frame 1912 described herein. NDPs (or sounding PPDUs) 1914 and 1916 as discussed herein may be sent (e.g., transmitted) over orthogonal resources such that they do not interfere with each other. STA 1906 may measure the first channel from AP 1904 to STA 1906 based on NDP (or sounding PPDU) 1916 and may determine the first feedback comprising CSI for the first channel based on the measurement. STA 1906 may similarly measure the second channel from AP 1902 to STA 1906 based on NDP (or sounding PPDU) 1914, and may determine second feedback comprising CSI for the second channel based on the measurement. STA 1906 may measure the first channel based on NDP 1916 and the second channel based on NDP 1914 in response to (or after) STA 1906 receiving NDPA frame 1912. AP 1902 may send (e.g., transmit) to STA 1906 BFRP frame 1918 soliciting the first feedback and the second feedback, for example, subsequent to a SIFS after transmission of NDPs (or sounding PPDUs) 1914 and 1916. STA 1906 may send (e.g., transmit) frame 1920 comprising the first feedback and the second feedback, based on (e.g., in response to) BFRP frame 1918. Frame 1920 may comprise a compressed beamforming/channel quality indication (CQI) frame.

AP 1902 may send (e.g., transmit) to AP 1904 a frame 1922 soliciting a status of reception, by AP 1904, of the first feedback comprising CSI for the first channel from AP 1904 to STA 1906. Frame 1922 may further solicit a status of reception, by AP 1904, of the second feedback comprising CSI for the second channel from AP 1902 to STA 1906. Frame 1922 may comprise an action frame or a trigger frame, for example. AP 1902 may receive frame 1920 comprising at least the first feedback from STA 1906. AP 1902 may send (e.g., transmit) frame 1922 after/based on receiving frame 1920 from STA 1906.

AP 1904 may respond to frame 1922 by sending (e.g., transmitting) a frame 1924 to AP 1902. Frame 1924 may indicate the status of reception, by AP 1904, of the first feedback comprising CSI for the first channel from AP 1904 to STA 1906. The status of reception, by AP 1904, of the first feedback may be based on a PHY-RXEARLYSIG.indication or a PHY-RXSTART.indication primitive not occurring, at AP 1904, in a first duration after AP 1904 receives BFRP frame 1918 (which triggers frame 1920 from STA 1906). The status of reception, by AP 1904, of the first feedback may comprise an indication of success or failure of AP 1904 to receive/decode the first feedback.

AP 1902 may be configured to initiate a coordinated beamforming transmission with AP 1904, based on the status of reception, by AP 1904, of the first feedback. AP 1902 may initiate the coordinated beamforming transmission with AP 1904 as shown in FIG. 19, based on the status of reception, by AP 1904, of the first feedback indicating success of AP 1904 to receive/decode the first feedback. AP 1902 may send (e.g., transmit) to AP 1904 a frame 1926 indicating/triggering a coordinated beamforming transmission by APs 1902 and AP 1904. APs 1902 and 1904 may send (e.g., transmit) respective PPDUs 1928 and 1930 to STAs 1906 and 1908, respectively, for the coordinated beamforming transmission. AP 1904 may apply a steering matrix based on the CSI comprised in the first feedback in the coordinated beamforming transmission.

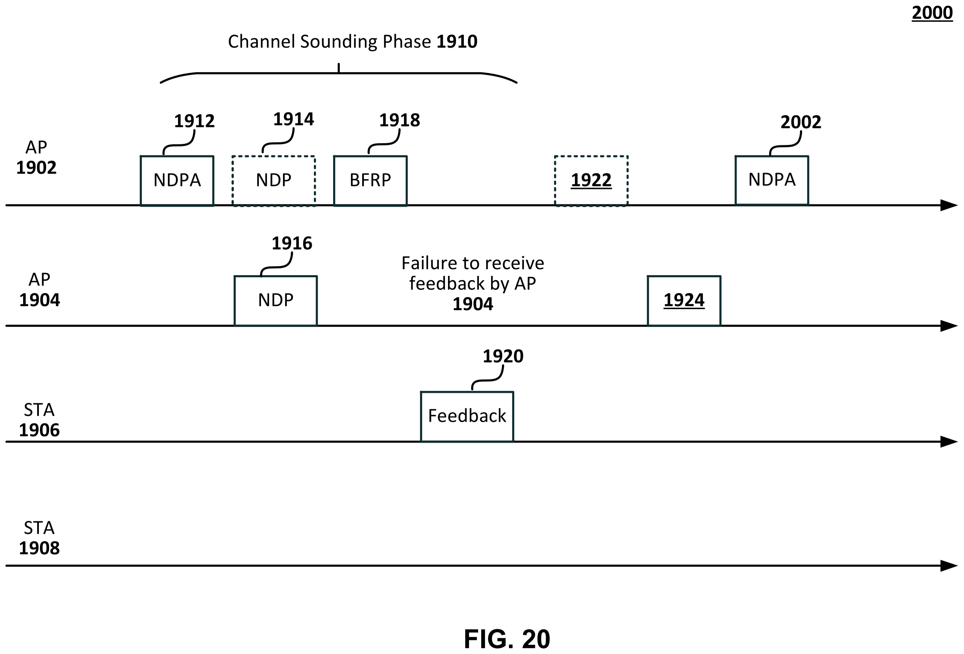

AP 1902 may initiate another coordinated sounding procedure with AP 1904, as shown in FIG. 20, based on the status of reception, by AP 1904, of the first feedback indicating failure of AP 1904 to receive/decode the first feedback. AP 1902 may send (e.g., transmit) an NDPA frame 2002, as shown in example 2000, after receiving frame 1924. NDPA frame 2002 may be similar to NDPA frame 1912 described herein and may initiate the coordinated sounding procedure. STA 1906 may again determine the first feedback comprising CSI for the first channel from AP 1904 to STA 1906, as part of the coordinated sounding procedure, and may send (e.g., transmit) a frame (not shown in FIG. 20) comprising the first feedback to AP 1902. AP 1904 may receive the frame comprising the first feedback to obtain the first feedback. A frame exchange similar to the exchange of frames 1922 and 1924 may follow the transmission of the frame comprising the first feedback by STA 1906.

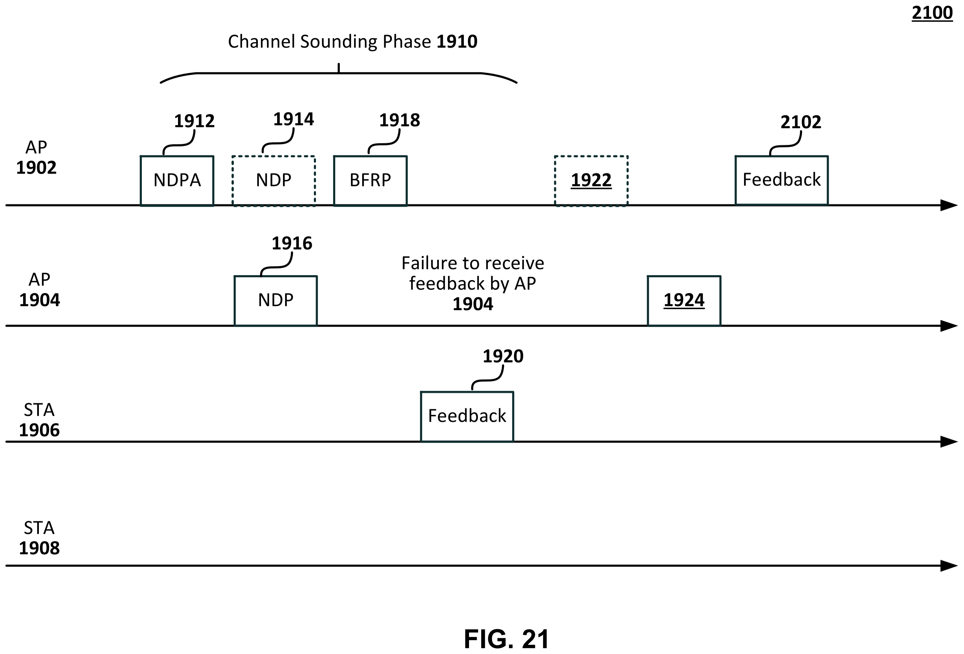

AP 1902 may send (e.g., transmit) the first feedback to AP 1904 as shown in FIG. 21, based on the status of reception, by AP 1904, of the first feedback indicating failure of AP 1904 to receive/decode the first feedback. AP 1902 may send (e.g., transmit) to AP 1904 a frame 2102 comprising the first feedback as shown in example 2100. AP 1904 may acknowledge reception of frame 2102. AP 1902 may send (e.g., transmit) the first feedback to AP 1904 via a backhaul channel. AP 1902 may subsequently initiate the coordinated beamforming transmission with AP 1904 as described herein with reference to FIG. 19.

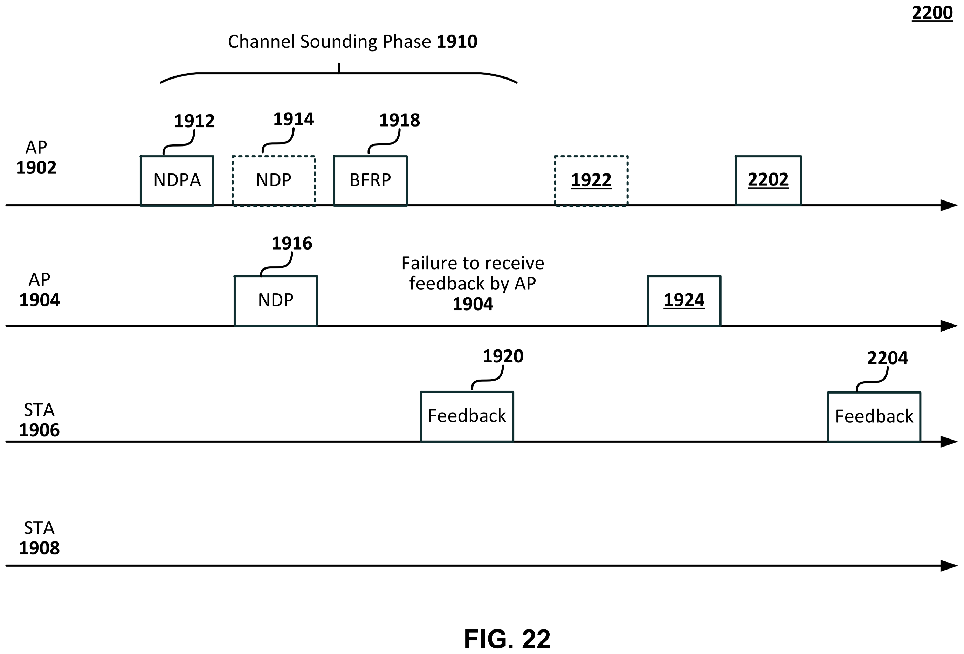

AP 1902 may trigger STA 1906 to re-send (e.g., re-transmit) the first feedback, as shown in FIG. 22, based on the status of reception, by AP 1904, of the first feedback indicating failure of AP 1904 to receive/decode the first feedback. AP 1902 may send (e.g., transmit) to STA 1906 a frame 2202 that triggers STA 1906 to send (e.g., transmit) a frame 2204 comprising the feedback, as shown in example 2200, after receiving frame 1924. AP 1904 may receive frame 2204 to obtain the feedback. An exchange similar to the exchange of frames 1922 and 1924 may follow the transmission of frame 2204 by STA 1906.

The exchange of frames 1922 and 1924 may be part of the coordinated sounding procedure by APs 1902 and 1904. For example, the exchange of frames 1922 and 1924 may be part of channel sounding phase 1910, or may immediately follow channel sounding phase 1910. The exchange of frames 1922 may occur within the same TXOP as the coordinated sounding procedure. The exchange of frames 1922 and 1924 may be part of the frame exchange preceding the coordinated beamforming transmission by APs 1902 and 1904. The exchange of frames 1922 and 1924 may occur immediately before AP 1902 initiates the coordinated beamforming transmission by APs 1902 and 1904 by sending (e.g., transmitting) a trigger frame to AP 1904.

AP 1904 may send (e.g., transmit) frame 1924 without being solicited by AP 1902. Frame 1924 may comprise an action frame, a trigger frame, a multi-user request to send (MU-RTS) frame, or an initial control frame (ICF). AP 1904 may send (e.g., transmit) frame 1924 after the end of the coordinated sounding procedure. AP 1904 may send (e.g., transmit) frame 1924 to indicate failure of AP 1904 to receive/decode the first feedback only. AP 1904 may not send (e.g., transmit) frame 1924, for example, if AP 1904 successfully receives/decodes the first feedback. Frame 1924 may indicate an allocation, by AP 1904 to AP 1902, of a portion of a TXOP obtained by AP 1904. AP 1902 may initiate the frame exchange preceding the coordinated beamforming transmission during the allocated portion of the TXOP. AP 1902 may initiate the frame exchange preceding the coordinated beamforming transmission during a TXOP owned by AP 1902.

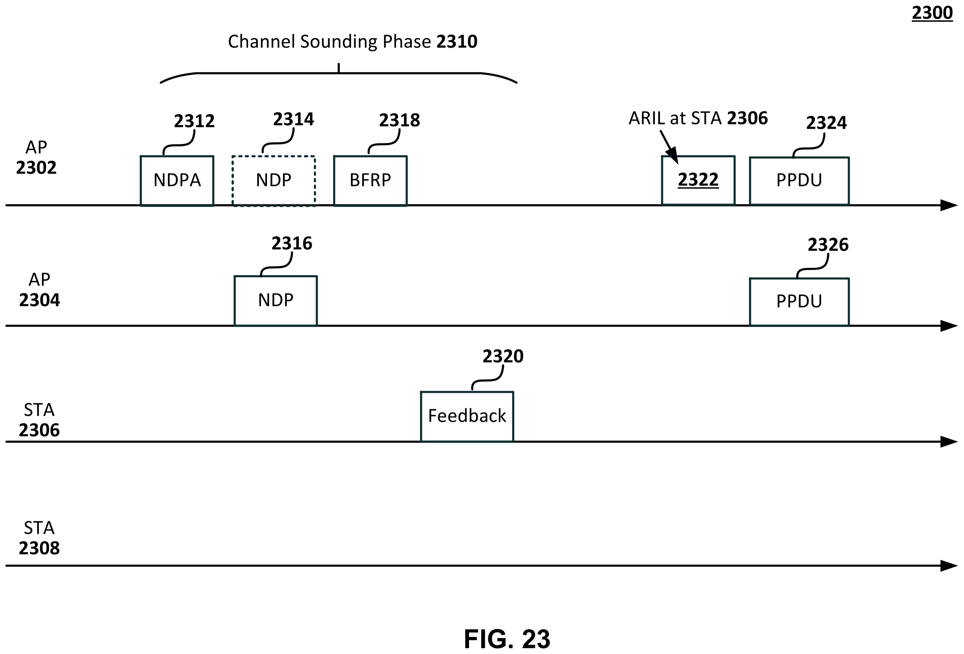

FIG. 23 shows an example 2300 of another coordinated beamforming procedure. Example 2300 may be provided for the purpose of illustration only and is not limiting. Example 2300 as shown in FIG. 23 may include AP 2302, AP 2304, STA 2306, and STA 2308. STA 2306 may be associated with AP 2302, and STA 2308 may be associated with AP 2304. APs 2302 and 2304 may form a multi-AP group. AP 2302 in example 2300 may wish to perform a coordinated beamforming procedure with AP 2304 in a TXOP obtained by AP 2302. AP 2302 may be the AP coordinating/controlling the coordinated beamforming procedure. AP 2302 may be referred to as a master/sharing AP, and AP 2304 may be referred to as a slave/shared AP. AP 2304 may be considered an OBSS AP relative to AP 2302 or STA 2306.

Example 2300 as shown in FIG. 23 may begin with a channel sounding phase 2310. Channel sounding phase 2310 may correspond to the channel sounding phase 1420 of the sequential NDP sounding procedure shown in FIG. 14. Channel sounding phase 2310 may serve for STA 2306 to estimate a first channel from AP 2304 to STA 2306, and to send (e.g., transmit) first feedback with CSI for the first channel from AP 2304 to STA 2306. The CSI may comprise at least one of: channel coefficients of the first channel; uncompressed beamforming feedback matrices computed based on the channel coefficients; and/or compressed beamforming feedback matrices computed based on the channel coefficients. Channel sounding phase 2310 may begin with AP 2302 sending (e.g., transmitting) to AP 2304 an NDPA frame 2312. AP 2304, based on (e.g., in response to) NDPA frame 2312, may send (e.g., transmit) an NDP (or a sounding PPDU) 2316 (e.g., a SIFS after receiving NDPA frame 2312). STA 2306 may measure the first channel from AP 2304 to STA 2306 based on NDP (or sounding PPDU) 2316 and may determine the first feedback comprising CSI for the first channel based on the measurement. STA 2306 may measure the first channel based on NDP 2316 in response to (or after) STA 2306 receiving NDPA frame 2312. AP 2302 may send (e.g., transmit) to STA 2306 a BFRP frame 2318 soliciting the first feedback, for example, subsequent to a SIFS after transmission of NDP 2316. STA 2306 may send (e.g., transmit) a frame 2320 comprising the first feedback, based on (e.g., in response to) BFRP frame 2318.

Channel sounding phase 2310 may correspond to the channel sounding phase 1510 of the joint NDP sounding procedure shown in FIG. 15. Channel sounding phase 2310 may serve for STA 2306 to estimate both the first channel from AP 2304 to STA 2306 and a second channel from AP 2302 to STA 2306, and to send (e.g., transmit) feedback with CSI for both the first and second channels. Both APs 2302 and 2304 may send (e.g., transmit) respective NDPs (or sounding PPDUs) 2314 and 2316 (e.g., a SIFS after NDPA frame 2312), after AP 2302 sends (e.g., transmits) NDPA frame 2312 described herein. NDPs (or sounding PPDUs) 2314 and 2316 as discussed herein may be sent (e.g., transmitted) over orthogonal resources such that the NDPs (or sounding PPDUs) do not interfere with each other. STA 2306 may measure the first channel from AP 2304 to STA 2306 based on NDP (or sounding PPDU) 2316 and may determine the first feedback comprising CSI for the first channel based on the measurement. STA 2306 may similarly measure the second channel from AP 2302 to STA 2306 based on NDP (or sounding PPDU) 2314 and may determine second feedback comprising CSI for the second channel based on the measurement. STA 2306 may measure the first channel based on NDP 2316 and the second channel based on NDP 2314 in response to (or after) STA 2306 receiving NDPA frame 2312. AP 2302 may send (e.g., transmit) to STA 2306 BFRP frame 2318 soliciting the first feedback and the second feedback, for example, subsequent to a SIFS after transmission of NDPs (or sounding PPDUs) 2314 and 2316. STA 2306 may send (e.g., transmit) frame 2320 comprising the first feedback and the second feedback, based on (e.g., in response to) BFRP frame 2318. Frame 2320 may comprise a compressed beamforming/channel quality indication (CQI) frame.

AP 2302 may initiate a coordinated transmission with AP 2302 by sending (e.g., transmitting) a frame 2322 to AP 2304, after channel sounding phase 2310. Frame 2322 may comprise a trigger frame. Frame 2322 may indicate an ARIL at STA 2306 of a PPDU 2326 to be sent (e.g., transmitted) by AP 2304 in the coordinated transmission. Frame 2322 may further indicate that AP 2304 is to send (e.g., transmit) PPDU 2326: based on the ARIL if AP 2304 did not receive the first feedback from STA 2306; and based on the CSI comprised in the first feedback if AP 2304 received the first feedback from STA 2306.

APs 2302 and 2304 may perform the coordinated transmission by sending (e.g., transmitting) respective PPDUs 2324 and 2326 to STAs 2306 and 2308, respectively, for the coordinated transmission, for example, subsequent to a SIFS after frame 2322. AP 2304 may send (e.g., transmit) PPDU 2326 based on the ARIL indicated in frame 2322. AP 2304 may send (e.g., transmit) PPDU 2326 based on the ARIL indicated in frame 2322, for example, if AP 2304 fails to receive/-decode the first feedback (e.g., the status of reception of the first feedback indicates failure of AP 2304 to receive/decode the first feedback). AP 2304 may determine a transmit power level of PPDU 2326 based on the CSI. Such PPDU transmission, not accounting for the CSI comprised in the first feedback, may ensure that AP 2304 sends (e.g., transmits) at a reduced transmit power tolerable by STA 2306.

AP 2304 may send (e.g., transmit) PPDU 2326 based on the CSI comprised in the first feedback. AP 2304 may send (e.g., transmit) PPDU 2326 based on the CSI comprised in the first feedback, for example, if AP 2304 successfully receives the first feedback (e.g., the status of reception of the first feedback indicates success of AP 2304 to receive/decode the first feedback). AP 2304 may determine a transmit power level of PPDU 2326 based on the CSI. APs 2302 and 2304 may thus perform a coordinated beamforming transmission for the coordinated transmission.

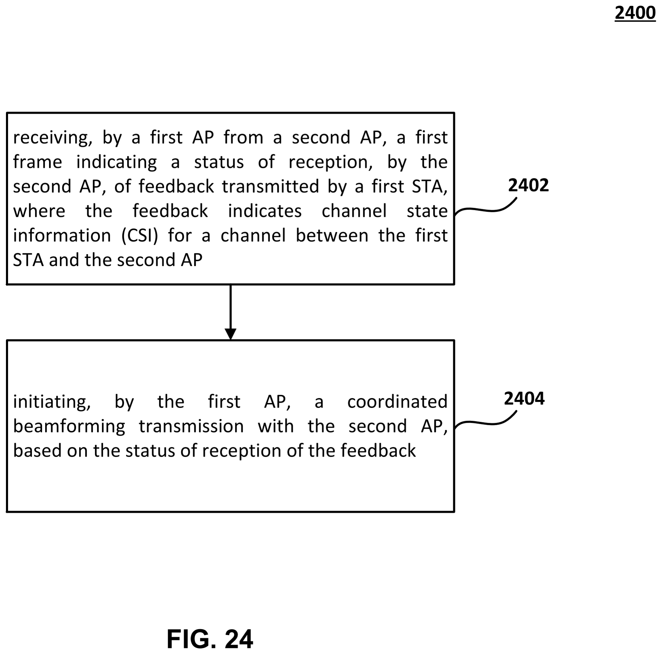

FIG. 24 shows an example process 2400 of a coordinated beamforming procedure. Example process 2400 may be provided for the purpose of illustration only and is not limiting. Example process 2400 may be performed by a first AP, such as AP 1902. Example process 2400 as shown in FIG. 24 may include steps 2402 and 2404.

Step 2402 may include receiving, by the first AP from a second AP, a first frame indicating a status of reception, by the second AP, of feedback sent (e.g., transmitted) by a STA. The second AP may be an OBSS AP relative to the first AP or the STA. The STA may be associated with the first AP. The feedback may indicate CSI for a channel between the STA and the second AP.

Step 2404 may include initiating, by the first AP, a coordinated beamforming transmission with the second AP, based on the status of reception of the feedback. The first frame may comprise at least one of: an action frame; a trigger frame; a multi-user request to send (e.g., transmit) (MU-RTS) frame; and/or an initial control frame.

Initiating the coordinated beamforming transmission based on the status of reception of the feedback in step 2404 may comprise sending (e.g., transmitting), by the first AP, a second frame indicating a beamforming transmission by the first AP and the second AP. The second AP may apply a steering matrix determined based on the CSI during the beamforming transmission.

Process 2400 may further comprise receiving, by the first AP from the STA, a third frame comprising the feedback. The third frame may comprise a compressed beamforming/channel quality indication (CQI) frame.

Process 2400 may further comprise sending (e.g., transmitting), by the first AP to the STA, a first BFRP trigger frame. The receiving of the third frame may be based on (e.g., in response to) the first BFRP trigger frame. The status of reception of the feedback may be based on a PHY-RXEARLYSIG.indication or a PHY-RXSTART.indication primitive not occurring, at the second AP, during a first duration after the second AP receives the first BFRP trigger frame. The CSI may comprise at least one of: channel coefficients of the channel between the STA and the second AP; uncompressed beamforming feedback matrices computed based on the channel coefficients; and/or compressed beamforming feedback matrices computed based on the channel coefficients.

Process 2400 may further comprise sending (e.g., transmitting), by the first AP to the STA, an NDPA frame. The STA may generate the feedback after receiving the NDPA frame. Process 2400 may further comprise receiving, by the first AP from the second AP and based on (e.g., in response to) the NDP announcement frame, a PPDU. The PPDU may comprise an NDP or a sounding PPDU. The PPDU may enable the STA to estimate the channel between the second AP and the STA.

The status of reception of the feedback may comprise an indication of success or failure of the second AP to receive/decode the feedback. Process 2400 may further comprise initiating, by the first AP, a coordinated sounding procedure with the second AP, based on the status of reception of the feedback indicating failure of the second AP to receive/decode the feedback.

Process 2400 may further comprise sending (e.g., transmitting), by the first AP to the second AP and based on (e.g., in response to) the first frame, a fourth frame comprising the feedback based on the status of reception of the feedback indicating failure of the second AP to receive/decode the feedback. Process 2400 may further comprise sending (e.g., transmitting), by the first AP to the STA, a fourth frame comprising a second BFRP trigger frame that solicits the feedback from the STA based on the status of reception of the feedback indicating failure of the second AP to receive/-decode the feedback.

Process 2400 may further comprise sending (e.g., transmitting), by the first AP to the second AP, a fifth frame. The fifth frame may comprise at least one of: an action and a trigger frame. The receiving of the first frame in step 2402 may be based on (e.g., in response to) sending (e.g., transmitting) the fifth frame. The first frame may indicate an allocation, to the first AP by the second AP, of a portion of a TXOP obtained by the second AP. Initiating the coordinated beamforming transmission based on the status of reception of the feedback in step 2404 may comprise initiating the coordinated beamforming transmission based on the status of reception of the feedback indicating success of the second AP to receive/decode the feedback.

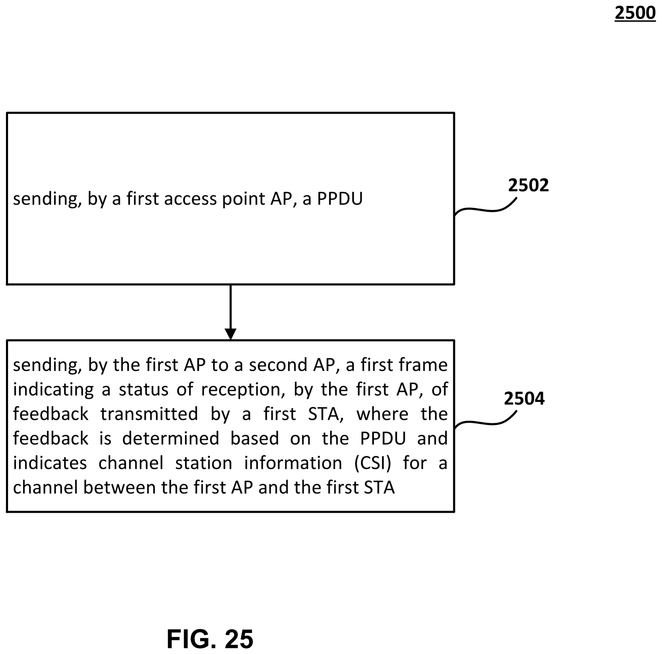

FIG. 25 shows another example process 2500 of a coordinated beamforming procedure. Example process 2500 may be provided for the purpose of illustration only and is not limiting. Example process 2500 may be performed by a first AP, such as AP 1904. Example process 2500 as shown in FIG. 25 may include steps 2502 and 2504.

Step 2502 may include sending (e.g., transmitting), by the first AP, a PPDU. Step 2504 may include sending (e.g., transmitting), by the first AP to a second AP, a first frame indicating a status of reception, by the first AP, of feedback sent (e.g., transmitted) by a STA. The first AP may be an OBSS AP relative to the second AP or the STA. The STA may be associated with the second AP. The feedback may be determined based on the PPDU and may indicate CSI for a channel between the first AP and the STA. The PPDU may comprise an NDP or a sounding PPDU. The PPDU may enable the STA to estimate the channel between the first AP and the STA. The first frame may comprise at least one of: an action frame; a trigger frame; a multi-user request to send (e.g., transmit) (MU-RTS) frame; and an initial control frame.

Process 2500 may further comprise receiving, by the first AP from the second AP, a second frame. The second frame may comprise an NDPA frame. The sending (e.g., transmitting) of the PPDU in step 2502 may be based on (e.g., in response to) the second frame.

Process 2500 may further comprise receiving, by the first AP from the second AP, a third frame indicating a beamforming transmission by the first AP and the second AP. Process 2500 may further comprise applying, by the first AP, a steering matrix determined based on the CSI during the beamforming transmission.

Process 2500 may further comprise receiving, by the first AP from the STA, a fourth frame comprising the feedback. The fourth frame may comprise a compressed beamforming/channel quality indication (CQI) frame.

Process 2500 may further comprise receiving, by the first AP from the second AP, a first BFRP trigger frame. The status of reception of the feedback may be based on a PHY-RXEARLYSIG.indication or a PHY-RXSTART.indication primitive not occurring, at the first AP, during a first duration after the first AP receives the first BFRP trigger frame.

The CSI may comprise at least one of: channel coefficients of the channel between the first AP and the STA; uncompressed beamforming feedback matrices computed based on the channel coefficients; and/or compressed beamforming feedback matrices computed based on the channel coefficients. The status of reception of the feedback may comprise an indication of success or failure of the first AP to receive/decode the feedback.

Process 2500 may further comprise receiving, by the first AP from the second AP and based on (e.g., in response to) the first frame, a fifth frame comprising the feedback based on the status of reception of the feedback indicating failure of the first AP to receive/decode the feedback. Process 2500 may further comprise receiving, by the first AP from the second AP, a sixth frame. The sixth frame may comprise at least one of: an action frame; and/or a trigger frame. The sending (e.g., transmitting) of the first frame in step 2504 may be based on (e.g., in response to) receiving the sixth frame. The first frame may indicate an allocation, to the second AP by the first AP, of a portion of a TXOP obtained by the first AP.

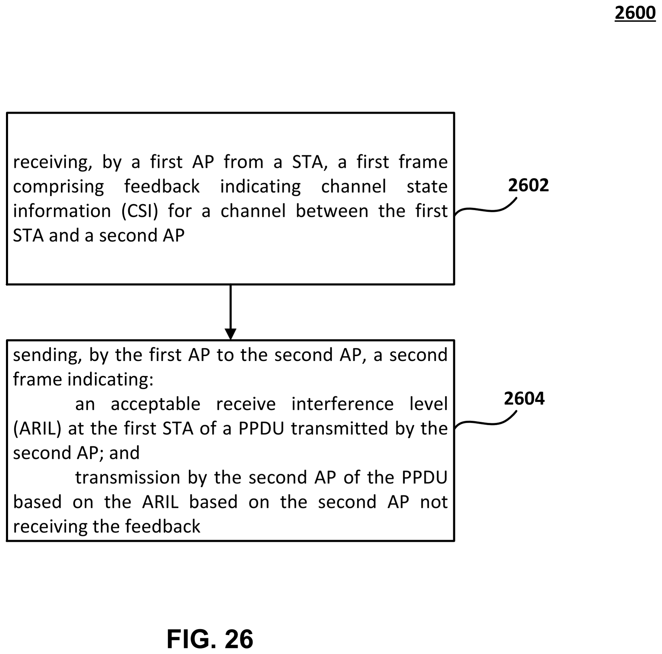

FIG. 26 shows another example process 2600 of a coordinated beamforming procedure. Example process 2600 may be provided for the purpose of illustration only and is not limiting. Example process 2600 may be performed by a first AP, such as AP 2302. Example process 2600 as shown in FIG. 26 may include steps 2602 and 2604.

Step 2602 may include receiving, by the first AP from a STA, a first frame comprising feedback indicating CSI for a channel between the STA and a second AP. The second AP may be an OBSS AP relative to the first AP or the STA. The STA may be associated with the first AP. The first frame may comprise a trigger frame.

Step 2604 may include sending (e.g., transmitting), by the first AP to the second AP, a second frame indicating an ARIL at the STA of a PPDU sent (e.g., transmitted) by the second AP. The PPDU may correspond to a PPDU to be sent (e.g., transmitted) by the second AP during a coordinated transmission by the first AP and the second AP. The coordinated transmission may be initiated/triggered by the first frame. The second frame may further indicate transmission by the second AP of the PPDU based on the ARIL based on the second AP not receiving the feedback. The second frame may indicate that the second AP is to send (e.g., transmit) the PPDU based on the ARIL. The second frame may indicate that the second AP is to send (e.g., transmit) the PPDU based on the ARIL, for example, if the second AP does not receive the feedback. The second frame may, alternatively or additionally, indicate transmission by the second AP of the PPDU based on the CSI based on the second AP receiving the feedback. The second frame may indicate that the second AP is to send (e.g., transmit) the PPDU based on the CSI. The second frame may indicate that the second AP is to send (e.g., transmit) the PPDU based on the CSI, for example, if the second AP receives the feedback.

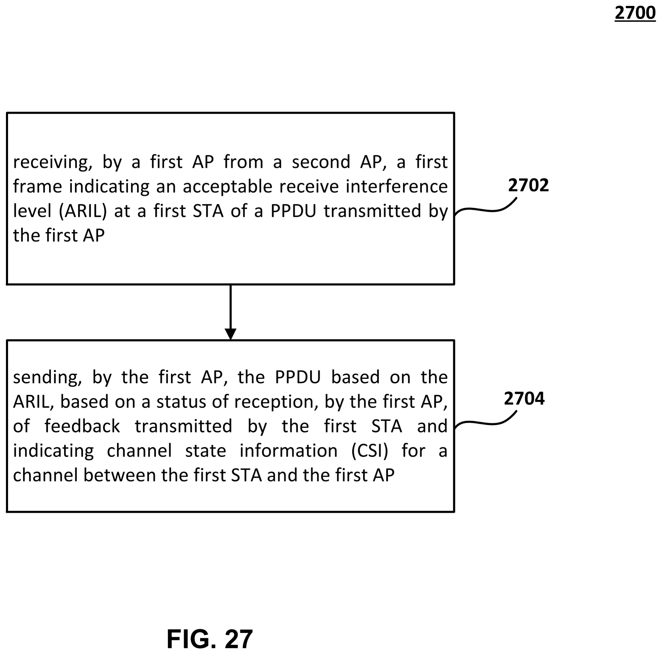

FIG. 27 shows another example process 2700 of a coordinated beamforming procedure. Example process 2700 may be provided for the purpose of illustration only and is not limiting. Example process 2700 may be performed by a first AP, such as AP 2304. Example process 2700 as shown in FIG. 27 may include steps 2702 and 2704.

Step 2702 may include receiving, by the first AP from a second AP, a first frame indicating an ARIL at a STA of a PPDU sent (e.g., transmitted) by the first AP. The first AP may be an OBSS AP relative to the second AP or the STA. The STA may be associated with the first AP. The first frame may comprise a trigger frame. The PPDU may correspond to a PPDU to be sent (e.g., transmitted) by the first AP in a coordinated transmission by the first AP and the second AP.

Step 2704 may include sending (e.g., transmitting), by the first AP, the PPDU based on the ARIL, based on a status of reception, by the first AP, of feedback sent (e.g., transmitted) by the STA and indicating CSI for a channel between the STA and the first AP. Step 2704 may further comprise sending (e.g., transmitting) the PPDU based on the ARIL. Step 2704 may further comprise sending (e.g., transmitting) the PPDU based on the ARIL, for example, if the status of reception of the feedback indicates failure of the first AP to receive/decode the feedback. Process 2700 may further comprise determining, by the first AP, a transmit power level of the PPDU based on the ARIL.

Step 2704 may further comprise sending (e.g., transmitting) the PPDU based on the CSI. Step 2704 may further comprise sending (e.g., transmitting) the PPDU based on the CSI, for example, if the status of reception of the feedback indicates success of the first AP to receive/decode the feedback. Process 2700 may further comprise determining a transmit power level of the PPDU based on the CSI.

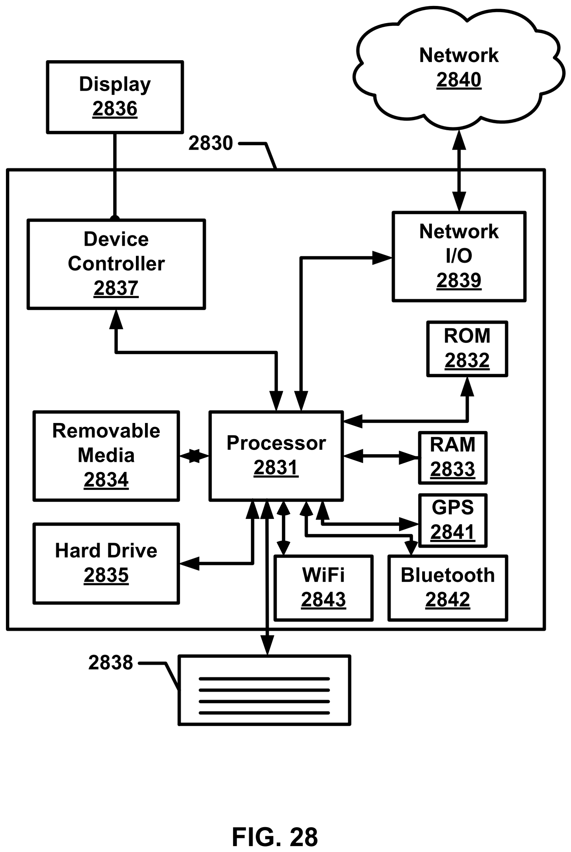

FIG. 28 shows example elements of a computing device that may be used to implement any of the various devices described herein, including, for example, a STA, an AP, communication devices, and/or any computing and/or communication device described herein. The computing device 2830 may comprise one or more processors 2831, which may execute instructions stored in the random-access memory (RAM) 2833, the removable media 2834 (such as a Universal Serial Bus (USB) drive, compact disk (CD) or digital versatile disk (DVD), or floppy disk drive), or any other desired storage medium. Instructions may also be stored in an attached (or internal) hard drive 2835. The computing device 2830 may also comprise a security processor (not shown), which may execute instructions of one or more computer programs to monitor the processes executing on the processor 2831 and any process that requests access to any hardware and/or software components of the computing device 2830 (e.g., ROM 2832, RAM 2833, the removable media 2834, the hard drive 2835, the device controller 2837, a network interface 2839, a GPS 2841, a Bluetooth interface 2842, a WiFi interface 2843, etc.). The computing device 2830 may comprise one or more output devices, such as the display 2836 (e.g., a screen, a display device, a monitor, a television, etc.), and may comprise one or more output device controllers 2837, such as a video processor. There may also be one or more user input devices 2838, such as a remote control, keyboard, mouse, touch screen, microphone, etc. The computing device 2830 may also comprise one or more network interfaces, such as a network interface 2839, which may be a wired interface, a wireless interface, or a combination of the two. The network interface 2839 may provide an interface for the computing device 2830 to communicate with a network 2840 (e.g., a RAN, or any other network). The network interface 2839 may comprise a modem (e.g., a cable modem), and the external network 2840 may comprise communication links, an external network, an in-home network, a provider's wireless, coaxial, fiber, or hybrid fiber/coaxial distribution system (e.g., a DOCSIS network), or any other desired network. Additionally, the computing device 2830 may comprise a location-detecting device, such as a global positioning system (GPS) microprocessor 2841, which may be configured to receive and process global positioning signals and determine, with possible assistance from an external server and antenna, a geographic position of the computing device 2830.

The example in FIG. 28 may be a hardware configuration, although the components shown may be implemented as software as well. Modifications may be made to add, remove, combine, divide, etc. components of the computing device 2830 as desired. Additionally, the components may be implemented using basic computing devices and components, and the same components (e.g., processor 2831, ROM storage 2832, display 2836, etc.) may be used to implement any of the other computing devices and components described herein. For example, the various components described herein may be implemented using computing devices having components such as a processor executing computer-executable instructions stored on a computer-readable medium, as shown in FIG. 28. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: receiving, by a first access point from a station, a first frame comprising feedback indicating channel state information for a channel between the station and a second access point.

Clause 1B. The method of clause 1A, further comprising: receiving, by the first access point from the second access point, a second frame indicating a status of reception, by the second access point, of the feedback.

Clause 1C. The method of clause 1B, further comprising: based on the status of reception of the feedback, sending, by the first access point in coordination with the second access point, a coordinated beamforming transmission. Reference to clause 1 herein may refer to one or each of clause 1A, clause 1B, and clause 1C.

Clause 2. The method of clause 1, further comprising: sending, by the first access point to the second access point, a fifth frame indicating: an acceptable receive interference level at the station of a physical layer protocol data unit (PPDU) sent by the second access point; and a transmission of the PPDU, by the second access point, is based on: the acceptable receive interference level; and the second access point not receiving the feedback.

Clause 3. The method of any one of clauses 1-2, further comprising: sending, by the first access point to the station, a null data physical layer protocol data unit (PPDU) (NDP) announcement frame, wherein the feedback is generated after the NDP announcement frame is sent.

Clause 4. The method of any one of clauses 1-3, wherein sending the coordinated beamforming transmission comprises: sending, by the first access point, a third frame indicating a beamforming transmission by the first access point and the second access point.

Clause 5. The method of any one of clauses 1-4, further comprising: receiving, by the first access point from the station, a third frame comprising: the feedback; and a channel quality indication (CQI) frame; and sending, by the first access point to the station, a first beamforming report poll (BFRP) trigger frame, wherein the receiving the third frame is based on the first BFRP trigger frame.

Clause 6. The method of any one of clauses 1-5, further comprising: receiving, by the first access point, from the second access point, and based on a null data physical layer protocol data unit (PPDU) (NDP) announcement frame, a PPDU, wherein: the PPDU comprises at least one of: an NDP; or a sounding PPDU; and wherein the PPDU is configured to enable the station to estimate the channel between the second access point and the station.

Clause 7. The method of any one of clauses 1-6, further comprising: initiating, by the first access point, a coordinated sounding procedure with the second access point, based on the status of reception of the feedback indicating a failure of the second access point to receive the feedback.

Clause 8. The method of any one of clauses 1-7, further comprising: sending, by the first access point, to the second access point, and based on the first frame, a fourth frame, wherein: the fourth frame comprises the feedback based on the status of reception of the feedback indicating a failure of the second access point to receive the feedback.

Clause 9. The method of any one of clauses 1-8, further comprising: sending, by the first access point to the station, a fourth frame, wherein: the fourth frame comprises a second beamforming report poll (BFRP) trigger frame that is configured to solicit the feedback from the station based on the status of reception of the feedback indicating a failure of the second access point to receive the feedback.

Clause 10. The method of any one of clauses 1-9, wherein the station is associated with the first access point.

Clause 11. The method of any one of clauses 1-10, wherein the second access point is an overlapping basic service set (OBSS) access point relative to the first access point or the station.

Clause 12. The method of any one of clauses 1-11, wherein the second access point applies a steering matrix determined based on the channel state information in the beamforming transmission.

Clause 13. The method of any one of clauses 5-12, wherein the third frame comprises a compressed beamforming/channel quality indication (CQI) frame.

Clause 14. The method of any one of clauses 1-13, wherein the status of reception of the feedback is based on a PHY-RXEARLYSIG.indication or a PHY-RXSTART.indication primitive not occurring, at the second access point, in a first duration after the second access point receives the first BFRP trigger frame.

Clause 15. The method of any one of clauses 1-14, wherein the channel state information comprises at least one of: channel coefficients of the channel between the station and the second access point; uncompressed beamforming feedback matrices computed based on the channel coefficients; or compressed beamforming feedback matrices computed based on the channel coefficients.

Clause 16. The method of any one of clauses 1-15, wherein the status of reception of the feedback comprises an indication of success or failure of the second access point to receive or decode the feedback.

Clause 17. The method of any one of clauses 1-16, further comprising sending, by the first access point to the second access point, a fifth frame, wherein the receiving of the first frame comprises receiving the first frame based on sending the fifth frame.

Clause 18. The method of clause 17, wherein the fifth frame comprises at least one of: an action frame; or a trigger frame.

Clause 19. The method of any one of clauses 1-18, wherein the first frame comprises at least one of: an action frame; a trigger frame; a multi-user request to send (MU-RTS) frame; or an initial control frame.

Clause 20. The method of any one of clauses 1-19, wherein initiating the coordinated beamforming transmission based on the status of reception of the feedback comprises initiating the coordinated beamforming transmission based on the status of reception of the feedback indicating success of the second access point to receive or decode the feedback.

Clause 21. The method of any one of clauses 1-20, wherein the first frame indicates an allocation, to the first access point by the second access point, of a portion of a transmission opportunity (TXOP) obtained by the second access point.

Clause 22A. A method comprising: receiving, by a first access point from a station, a first frame comprising feedback indicating channel state information for a channel between the station and a second access point.

Clause 22B. The method of clause 22A, further comprising: sending, by the first access point to the second access point, a second frame indicating: an acceptable receive interference level at the station of a physical layer protocol data unit (PPDU) sent by the second access point; and a transmission of the PPDU, by the second access point, is based on: the acceptable receive interference level; and the second access point not receiving the feedback. Reference to clause 22 herein may refer to one or each of clause 22A, and clause 22B.

Clause 23. The method of clause 22, wherein the station is associated with the first access point.

Clause 24. The method of any one of clauses 22-23, wherein the second frame further indicates: the PPDU sending by the second access point is further based on the second access point receiving the feedback.

Clause 25A. A method comprising: receiving, by a first access point from a second access point, a null data physical protocol data unit (PPDU) (NPD) announcement (NDPA) frame.

Clause 25B. The method of clause 25A, further comprising: sending, by the first access point and based on the NDPA frame, an NDP.

Clause 25C. The method of clause 25B, further comprising: sending, by the first access point to the second access point, a first frame indicating a status of reception, by the first access point, of feedback sent by a station, wherein: the feedback indicates channel station information for a channel between the first access point and the station; and the feedback is determined based on the NDP.

Reference to clause 25 herein may refer to one or each of clause 25A, 25B and clause 25C.

Clause 26. The method of clause 25, further comprising: receiving, by the first access point from the second access point, a second frame indicating a beamforming transmission by the first access point and the second access point.

Clause 27. The method of any one of clauses 25-26, further comprising: applying, by the first access point, a steering matrix determined based on the channel state information in a beamforming transmission.

Clause 28. The method of any one of clauses 25-27, further comprising: receiving, by the first access point from the station, a third frame comprising: the feedback; and a channel quality indication (CQI) frame.

Clause 29. The method of any one of clauses 25-28, further comprising: receiving, by the first access point from the second access point, a beamforming report poll (BFRP) trigger frame.

Clause 30. The method of any one of clauses 25-29, wherein: the PPDU comprises a sounding PPDU; and the PPDU enables the station to estimate the channel between the first access point and the station.

Clause 31. The method of any one of clauses 25-30, further comprising: receiving, by the first access point from the second access point and based on the first frame, a fourth frame comprising the feedback based on the status of reception of the feedback indicating failure of the first access point to receive the feedback.

Clause 32. The method of any one of clauses 25-31, further comprising: receiving, by the first access point from the second access point, a fifth frame, wherein the sending of the first frame comprises: sending the first frame based on receiving the fifth frame.

Clause 33. The method of any one of clauses 25-32, wherein the station is associated with the second access point.

Clause 34. The method of any one of clauses 25-33, wherein the first access point is an overlapping basic service set (OBSS) access point relative to the second access point or the station.

Clause 35. The method of any one of clauses 25-34, wherein the status of reception of the feedback is based on a PHY-RXEARLYSIG.indication or a PHY-RXSTART.indication primitive not occurring, at the first access point, in a first duration after the first access point receives the first BFRP trigger frame.

Clause 36. The method of any one of clauses 25-35, wherein the channel state information comprises at least one of: channel coefficients of the channel between the first access point and the station; uncompressed beamforming feedback matrices computed based on the channel coefficients; or compressed beamforming feedback matrices computed based on the channel coefficients.

Clause 37. The method of any one of clauses 25-36, wherein the PPDU comprises a null data physical protocol data unit (NDP).

Clause 38. The method of any one of clauses 25-37, wherein the status of reception of the feedback comprises an indication of success or failure of the first access point to receive or decode the feedback.

Clause 39. The method of any one of clauses 32-38, wherein the fifth frame comprises at least one of: an action frame; or a trigger frame.

Clause 40. The method of any one of clauses 25-39, wherein the first frame comprises at least one of: an action frame; a trigger frame; a multi-user request to send (MU-RTS) frame; or an initial control frame.

Clause 41. The method of any one of clauses 25-40, wherein the first frame indicates an allocation, to the second access point by the first access point, of a portion of a transmission opportunity (TXOP) obtained by the first access point.

Clause 42A. A method comprising: receiving, by a first access point from a second access point, a first frame indicating an acceptable receive interference level (ARIL) at a station of a physical layer protocol data unit (PPDU) sent by the first access point.

Clause 42B. The method of clause 42A, further comprising: sending, by the first access point, the PPDU based on the ARIL, based on a status of reception, by the first access point, of feedback sent by the station and indicating channel state information for a channel between the station and the first access point. Reference to clause 42 herein may refer to one or each of clause 42A, and clause 42B.

Clause 43. The method of clause 42, wherein the station is associated with the second access point.

Clause 44. The method of any one of clauses 42-43, wherein the sending of the PPDU based on the ARIL comprises sending the PPDU based on the ARIL if the status of reception of the feedback indicates failure of the first access point to receive or decode the feedback.

Clause 45. The method of any one of clauses 42-44, further comprising determining a transmit power level of the PPDU based on the ARIL.

Clause 46. The method of any one of clauses 42-45, wherein the sending of the PPDU based on the ARIL further comprises sending the PPDU based on the channel state information if the status of reception of the feedback indicates success of the first access point to receive or decode the feedback.

Clause 47. The method of any one of clauses 42-46, further comprising determining a transmit power level of the PPDU based on the channel state information.

A first access point may perform a method comprising multiple operations. The first access point may receive, from a station, a first frame comprising feedback indicating channel state information for a channel between the station and a second access point. The first access point may receive, from the second access point, a second frame indicating a status of reception, by the second access point, of the feedback. The first access point may, based on the status of reception of the feedback, send, in coordination with the second access point, a coordinated beamforming transmission. The first access point may send, to the second access point, a fifth frame indicating: an acceptable receive interference level at the station of a physical layer protocol data unit (PPDU) sent by the second access point; and a transmission of the PPDU, by the second access point, may be based on: the acceptable receive interference level; and the second access point not receiving the feedback. The first access point may send, to the station, a null data physical layer protocol data unit (PPDU) (NDP) announcement frame, wherein the feedback may be generated after the NDP announcement frame is sent, wherein sending the coordinated beamforming transmission may comprise: sending, by the first access point, a third frame indicating a beamforming transmission by the first access point and the second access point. The first access point may receive, from the station, a third frame comprising: the feedback; and a channel quality indication (CQI) frame; and sending, by the first access point to the station, a first beamforming report poll (BFRP) trigger frame, wherein the receiving the third frame may be based on the first BFRP trigger frame. The first access point may receive, from the second access point and based on a null data physical layer protocol data unit (PPDU) (NDP) announcement frame, a PPDU, wherein: the PPDU may comprise at least one of: an NDP; or a sounding PPDU; and wherein the PPDU may be configured to enable the station to estimate the channel between the second access point and the station. The first access point may initiate a coordinated sounding procedure with the second access point, based on the status of reception of the feedback indicating a failure of the second access point to receive the feedback. The first access point may send, to the second access point and based on the first frame, a fourth frame, wherein: the fourth frame may comprise the feedback based on the status of reception of the feedback indicating a failure of the second access point to receive the feedback. The first access point may send, to the station, a fourth frame, wherein: the fourth frame may comprise a second beamforming report poll (BFRP) trigger frame that is configured to solicit the feedback from the station based on the status of reception of the feedback indicating a failure of the second access point to receive the feedback, wherein the station may be associated with the first access point; wherein the second access point may be an overlapping basic service set (OBSS) access point relative to the first access point or the station; wherein the second access point may apply a steering matrix determined based on the channel state information in the beamforming transmission; wherein the third frame may comprise a compressed beamforming/channel quality indication (CQI) frame; wherein the status of reception of the feedback may be based on a PHY-RXEARLYSIG.indication or a PHY-RXSTART.indication primitive not occurring, at the second access point, in a first duration after the second access point receives the first BFRP trigger frame; wherein the channel state information may comprise at least one of: channel coefficients of the channel between the station and the second access point; uncompressed beamforming feedback matrices computed based on the channel coefficients; or compressed beamforming feedback matrices computed based on the channel coefficients; wherein the status of reception of the feedback may comprise an indication of success or failure of the second access point to receive or decode the feedback. The first access point may send, to the second access point, a fifth frame, wherein the receiving of the first frame may comprise receiving the first frame based on sending the fifth frame, wherein the fifth frame may comprise at least one of: an action frame; or a trigger frame; wherein the first frame may comprise at least one of: an action frame; a trigger frame; a multi-user request to send (MU-RTS) frame; or an initial control frame; wherein initiating the coordinated beamforming transmission based on the status of reception of the feedback may comprise initiating the coordinated beamforming transmission based on the status of reception of the feedback indicating success of the second access point to receive or decode the feedback; wherein the first frame may indicate an allocation, to the first access point by the second access point, of a portion of a transmission opportunity (TXOP) obtained by the second access point. A computing device may comprise: one or more processors; and memory storing instructions that, when executed by the one or more processors, cause the computing device to perform the described method, additional operations and/or include the additional elements. A system comprising: a first access point configured to perform the described method, additional operations, and/or include the additional elements; and a second access point configured to send the second frame. A computer-readable medium storing instructions that, when executed, cause performance of the described method, additional operations and/or include the additional elements.

A first access point may perform a method comprising multiple operations. The first access point may receive, from a station, a first frame comprising feedback indicating channel state information for a channel between the station and a second access point. The first access point may send, to the second access point, a second frame indicating: an acceptable receive interference level at the station of a physical layer protocol data unit (PPDU) sent by the second access point; and a transmission of the PPDU, by the second access point, may be based on: the acceptable receive interference level; and the second access point not receiving the feedback, wherein the station may be associated with the first access point; wherein the second frame may further indicate: the PPDU sending by the second access point may be further based on the second access point receiving the feedback. A computing device may comprise: one or more processors; and memory storing instructions that, when executed by the one or more processors, cause the computing device to perform the described method, additional operations and/or include the additional elements. A system comprising: a first access point configured to perform the described method, additional operations, and/or include the additional elements; and a second access point configured to receive the second frame. A computer-readable medium storing instructions that, when executed, cause performance of the described method, additional operations and/or include the additional elements.

A first access point may perform a method comprising multiple operations. The first access point may may receive, from a second access point, a null data physical protocol data unit (PPDU) (NPD) announcement (NDPA) frame. The first access point may send, based on the NDPA frame, an NDP. The first access point may send, to the second access point, a first frame indicating a status of reception, by the first access point, of feedback sent by a station, wherein: the feedback may indicate channel station information for a channel between the first access point and the station; and the feedback is determined based on the NDP. The first access point may receive, from the second access point, a second frame indicating a beamforming transmission by the first access point and the second access point. The first access point may apply a steering matrix determined based on the channel state information in a beamforming transmission. The first access point may receive, from the station, a third frame comprising: the feedback; and a channel quality indication (CQI) frame. The first access point may receive, from the second access point, a beamforming report poll (BFRP) trigger frame, wherein: the PPDU may comprise a sounding PPDU; and the PPDU may enable the station to estimate the channel between the first access point and the station. The first access point may receive, from the second access point and based on the first frame, a fourth frame comprising the feedback based on the status of reception of the feedback indicating failure of the first access point to receive the feedback. The first access point may receive, from the second access point, a fifth frame, wherein the sending of the first frame may comprise: sending the first frame based on receiving the fifth frame, wherein the station may be associated with the second access point; wherein the first access point may be an overlapping basic service set (OBSS) access point relative to the second access point or the station; wherein the status of reception of the feedback may be based on a PHY-RXEARLYSIG.indication or a PHY-RXSTART.indication primitive not occurring, at the first access point, in a first duration after the first access point receives the first BFRP trigger frame, wherein the channel state information may comprise at least one of: channel coefficients of the channel between the first access point and the station; uncompressed beamforming feedback matrices computed based on the channel coefficients; or compressed beamforming feedback matrices computed based on the channel coefficients; wherein the PPDU may comprise a null data physical protocol data unit (NDP); wherein the status of reception of the feedback may comprise an indication of success or failure of the first access point to receive or decode the feedback; wherein the fifth frame may comprise at least one of: an action frame; or a trigger frame; wherein the first frame may comprise at least one of: an action frame; a trigger frame; a multiuser request to send (MU-RTS) frame; or an initial control frame; wherein the first frame may indicate an allocation, to the second access point by the first access point, of a portion of a transmission opportunity (TXOP) obtained by the first access point. A computing device may comprise: one or more processors; and memory storing instructions that, when executed by the one or more processors, cause the computing device to perform the described method, additional operations and/or include the additional elements. A system comprising: a first access point configured to perform the described method, additional operations, and/or include the additional elements; and a second access point configured to send the NDPA frame. A computer-readable medium storing instructions that, when executed, cause performance of the described method, additional operations and/or include the additional elements.

A first access point may perform a method comprising multiple operations. The first access point may receive, from a second access point, a first frame indicating an acceptable receive interference level (ARIL) at a station of a physical layer protocol data unit (PPDU) sent by the first access point. The first access point may send the PPDU based on the ARIL, based on a status of reception, by the first access point, of feedback sent by the station and indicating channel state information for a channel between the station and the first access point, wherein the station may be associated with the second access point; wherein the sending of the PPDU based on the ARIL may comprise sending the PPDU based on the ARIL if the status of reception of the feedback indicates failure of the first access point to receive or decode the feedback. The first access point may determine a transmit power level of the PPDU based on the ARIL, wherein the sending of the PPDU based on the ARIL may further comprise sending the PPDU based on the channel state information if the status of reception of the feedback indicates success of the first access point to receive or decode the feedback. The first access point may determine a transmit power level of the PPDU based on the channel state information. A computing device may comprise: one or more processors; and memory storing instructions that, when executed by the one or more processors, cause the computing device to perform the described method, additional operations and/or include the additional elements. A system comprising: a first access point configured to perform the described method, additional operations, and/or include the additional elements; and a second access point configured to send the first frame. A computer-readable medium storing instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:

   receiving, by a first access point from a station, a first frame comprising feedback indicating channel state information for a channel between the station and a second access point;
   receiving, by the first access point from the second access point, a second frame indicating a status of reception, by the second access point, of the feedback; and
based on the status of reception of the feedback, sending, by the first access point in coordination with the second access point, a coordinated beamforming transmission.

2. The method of claim 1, further comprising:
sending, by the first access point to the second access point, a fifth frame indicating:

   an acceptable receive interference level at the station of a physical layer protocol data unit (PPDU) sent by the second access point; and
   a transmission of the PPDU, by the second access point, is based on:

      the acceptable receive interference level; and
      the second access point not receiving the feedback.

3. The method of any one of claims 1-2, further comprising:
sending, by the first access point to the station, a null data physical layer protocol data unit (PPDU) (NDP) announcement frame, wherein the feedback is generated after the NDP announcement frame is sent.

4. The method of any one of claims 1-3, wherein sending the coordinated beamforming transmission comprises:
sending, by the first access point, a third frame indicating a beamforming transmission by the first access point and the second access point.

5. The method of any one of claims 1-4, further comprising:

   receiving, by the first access point from the station, a third frame comprising:

      the feedback; and
      a channel quality indication (CQI) frame; and

   sending, by the first access point to the station, a first beamforming report poll (BFRP) trigger frame, wherein the receiving the third frame is based on the first BFRP trigger frame.

6. The method of any one of claims 1-5, further comprising:
receiving, by the first access point, from the second access point, and based on a null data physical layer protocol data unit (PPDU) (NDP) announcement frame, a PPDU, wherein:

the PPDU comprises at least one of:

   an NDP; or
   a sounding PPDU; and

wherein the PPDU is configured to enable the station to estimate the channel between the second access point and the station.

7. The method of any one of claims 1-6, further comprising:
initiating, by the first access point, a coordinated sounding procedure with the second access point, based on the status of reception of the feedback indicating a failure of the second access point to receive the feedback.

8. The method of any one of claims 1-7, further comprising:
sending, by the first access point, to the second access point, and based on the first frame, a fourth frame, wherein:
the fourth frame comprises the feedback based on the status of reception of the feedback indicating a failure of the second access point to receive the feedback.

9. The method of any one of claims 1-8, further comprising:
sending, by the first access point to the station, a fourth frame, wherein:
the fourth frame comprises a second beamforming report poll (BFRP) trigger frame that is configured to solicit the feedback from the station based on the status of reception of the feedback indicating a failure of the second access point to receive the feedback.

10. The method of any one of claims 1-9, further comprising:
sending, by the first access point to the second access point, a sixth frame, wherein:

   the sixth frame comprises at least one of:

      an action frame; or
      a trigger frame; and

   the receiving of the first frame comprises receiving the first frame based on sending the sixth frame.

11. The method of any one of claims 1-10, wherein the channel state information comprises at least one of:

   channel coefficients of the channel between the station and the second access point;
   uncompressed beamforming feedback matrices based on the channel coefficients; or compressed beamforming feedback matrices based on the channel coefficients.

12. The method of any of claims 1-11, wherein the status of reception of the feedback comprises an indication of success or failure of the second access point to receive the feedback.

13. A computing device comprising:

one or more processors; and
memory storing instructions that, when executed by the one or more processors, cause the computing device to perform the method of any one of claims 1-12.

14. A system comprising:

an access point configured to perform the method of any one of claims 1-12; and
a station configured to send the first frame.

15. A computer-readable medium storing instructions that, when executed, cause performance of the method of any one of claims 1-12.

**FIG. 1**

FIG. 2

FIG. 3

EDCA

COFDMA

Time

Frequency

AP2

AP1

AP1 AP2 AP3 AP4

AP1 AP2 AP3 AP4

TXOP

TXOP

20MHz

80 MHz

**FIG. 4**

500

FIG. 5

**FIG. 6**

**FIG. 7**

EP 4 757 193 A1

EHT Sounding NDP

**FIG. 8**

900

Frame Control | Duration | RA | TA | Sounding Dialog Token | STA Info List | FCS

NDP Announcement Variant | Sounding Dialog Token Number

STA Info

STA Info

AID11 | Partial BW Info | Reserved | Nc Index | Feedback Type And Ng | Disambiguation | Codebook Size | Reserved

Resolution | Feedback Bitmap

**FIG. 9**

**1000**

EP 4 757 193 A1

Bits:

| 4 | 12 | 1 | 1 | 2 | 2 | 1 | 3 |
|---|----|---|---|---|---|---|---|
| Trigger Type | UL Length | More TF | CS Required | UL BW | GI And HE/EHT-LTF Type/Triggered TXOP Sharing Mode | Reserved | Number of HE-LTF Symbols And Midamble Periodicity |

Bits:

| 1 | 1 | 6 | 2 | 1 | 16 | 1 | 1 |
|---|---|---|---|---|----|---|---|
| Reserved | LDPC Extra Symbol Segment | Ap Tx Power | Pre-FEC Padding Factor | PE Disambiguity | UL Spatial Reuse | Reserved | HE/EHT P160 |

Bits:

| 1 | 7 | 1 | variable |
|---|---|---|----------|
| Special User Info Field Flag | EHT Reserved | Reserved | Trigger Dependent Common Info |

Octets:

| 2 | 2 | 6 | 6 | 8 or more | variable | variable | 4 |
|---|---|---|---|-----------|----------|----------|---|
| Frame Control | Duration | RA | TA | Common Info | User Info List | Padding | FCS |

EHT Variant User Info Field Format

| AID12 | RU Allocation | UL FEC Coding Type | UL FEC-MCS | Reserved | SS Allocation/ RA-RU Information | UL Target Receive Power | PS160 | Trigger Dependent User Info |
|-------|---------------|--------------------|-----------|----------|----------------------------------|-------------------------|-------|------------------------------|

Bits:

| 12 | 8 | 1 | 4 | 1 | 6 | 7 | 1 | variable |
|----|---|---|---|---|---|---|---|----------|

**FIG. 10**

44

| Frame Control | Duration | Address 1 | Address 2 | Address 3 | Sequence Control | HT Control | Frame Body | FCS |
|---|---|---|---|---|---|---|---|---|

| Action | ... |
|---|---|

| Category | EHT Action | EHT MIMO Control | EHT Compressed Beamforming Report | EHT MU Exclusive Beamforming Report | EHT CQI Report |
|---|---|---|---|---|---|

**FIG. 11**

EP 4 757 193 A1

EP 4 757 193 A1

**FIG. 12**

**1300**

Octets:

| 2 | 2 | 6 | 6 | 6 | 2 | 0 or 4 | variable | 4 |
|---|---|---|---|---|---|---|---|---|
| Frame Control | Duration | Address 1 | Address 2 | Address 3 | Sequence Control | HT Control | Frame Body | FCS |

Management frame format

← MAC Header →

| Action | ... | Vendor Specific elements | MME | MIC | Authenticated Mesh Peering Exchange |
|---|---|---|---|---|---|

Action frame format

Octets: 1 variable

| Category | Action Details |
|---|---|

Action field format

Octets: 1 variable

| Public Action | Public Action Details |
|---|---|

Public action frame format

**FIG. 13**

EP 4 757 193 A1

**FIG. 14**

EP 4 757 193 A1

**1500**

Channel Sounding Phase **1510**      Channel Sounding Phase **1520**

AP
**1502**

**1512** NDPA    **1514** NDP    **1516** BFRP      **1525** NDP

AP
**1504**

**1515** NDP      **1522** NDPA    **1524** NDP    **1526** BFRP

STA
**1506**

**1518** NDP Feedback

STA
**1508**

**1528** NDP Feedback

**FIG. 15**

**FIG. 16**

EP 4 757 193 A1

**FIG. 17**

FIG. 18

1800

AP 1802 — Channel Sounding Phase 1810 — 1812 NDPA, 1814 NDP, 1818 BFRP, 1822 TF, 1824 PPDU

AP 1804 — 1816 NDP, Failure to receive feedback by AP 1804, No C-BF PPDU transmission by AP 1804

STA 1806 — 1820 Feedback

STA 1808

**FIG. 19**

EP 4 757 193 A1

**FIG. 20**

EP 4 757 193 A1

Channel Sounding Phase **1910**

**2100**

**AP 1902**

**1912** NDPA

**1914** NDP

**1918** BFRP

**1922**

**2102** Feedback

**AP 1904**

**1916** NDP

Failure to receive feedback by AP **1904**

**1924**

**STA 1906**

**1920** Feedback

**STA 1908**

**FIG. 21**

**FIG. 22**

EP 4 757 193 A1

FIG. 23

EP 4 757 193 A1

**2400**

EP 4 757 193 A1

```
┌──────────────────────────────────────┐
│ receiving, by a first AP from a second │
│ AP, a first frame indicating a status  │
│ of reception, by the second AP, of     │──── 2402
│ feedback transmitted by a first STA,    │
│ where the feedback indicates channel    │
│ state information (CSI) for a channel    │
│ between the first STA and the second AP │
└──────────────────────────────────────┘
                    │
                    ▼
┌──────────────────────────────────────┐
│ initiating, by the first AP, a          │
│ coordinated beamforming transmission    │──── 2404
│ with the second AP, based on the        │
│ status of reception of the feedback     │
└──────────────────────────────────────┘
```

**FIG. 24**

sending, by a first access point AP, a PPDU — 2502

sending, by the first AP to a second AP, a first frame indicating a status of reception, by the first AP, of feedback transmitted by a first STA, where the feedback is determined based on the PPDU and indicates channel station information (CSI) for a channel between the first AP and the first STA — 2504

**FIG. 25**

EP 4 757 193 A1

**2600**

receiving, by a first AP from a STA, a first frame comprising feedback indicating channel state information (CSI) for a channel between the first STA and a second AP — **2602**

sending, by the first AP to the second AP, a second frame indicating:

an acceptable receive interference level (ARIL) at the first STA of a PPDU transmitted by the second AP; and

transmission by the second AP of the PPDU based on the ARIL based on the second AP not receiving the feedback — **2604**

**FIG. 26**

**2700**

receiving, by a first AP from a second AP, a first frame indicating an acceptable receive interference level (ARIL) at a first STA of a PPDU transmitted by the first AP — **2702**

sending, by the first AP, the PPDU based on the ARIL, based on a status of reception, by the first AP, of feedback transmitted by the first STA and indicating channel state information (CSI) for a channel between the first STA and the first AP — **2704**

**FIG. 27**

**FIG. 28**

## EUROPEAN SEARCH REPORT

**Application Number**

EP 25 22 1728

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/155407 A1 (NAKANO TAKAYUKI [JP] ET AL) 9 May 2024 (2024-05-09)<br>* paragraph [0054] - paragraph [0121] *<br>* paragraph [0164] - paragraph [0173] *<br>* paragraph [0287] - paragraph [0308] *<br>* figures 1-8, 20 *<br>----- | 1-15 | INV.<br>H04B7/024<br>H04B7/06<br>H04J11/00 |
| A | EDWARD AU:<br>IEEE DRAFT WGDS; 117903824689Z IEEE-SA IMEET CENTRAL, PISCATAWAY, NJ USA,<br>vol. 802.11 - Editorial,<br>25 March 2023 (2023-03-25), pages 1-1005,<br>XP068285116,<br>[retrieved on 2023-07-15]<br>* page 630 *<br>----- | 1-15 | |
| A | INSIK JUNG (LGE): "OBSS sounding for C-BF",<br>IEEE DRAFT;<br>11-24-1843-00-00BN-OBSS-SOUNDING-FOR-C-BF<br>IEEE-SA MENTOR, PISCATAWAY, NJ USA,<br>vol. 802.11 UHR; 802.11bn, no. 0,<br>8 November 2024 (2024-11-08), pages 1-15,<br>XP068314770,<br>[retrieved on 2024-11-08]<br>* page 1 - page 9 *<br>----- | 1-15 | **TECHNICAL FIELDS SEARCHED (IPC)**<br><br>H04B<br>H04J |

The present search report has been drawn up for all claims

| Place of search | Date of completion of the search | Examiner |
|---|---|---|
| Munich | 31 March 2026 | Vucic, Nikola |

EPO FORM 1503 03.82 (P04C01)

# EP 4 757 193 A1

## ANNEX TO THE EUROPEAN SEARCH REPORT
## ON EUROPEAN PATENT APPLICATION NO.

EP 25 22 1728

31-03-2026

| Patent document cited in search report | Publication date | Patent family member(s) | Publication date |
|---|---|---|---|
| US 2024155407 A1 | 09-05-2024 | CN 116848944 A | 03-10-2023 |
| | | EP 4297471 A1 | 27-12-2023 |
| | | JP 7803920 B2 | 21-01-2026 |
| | | JP 2026042933 A | 11-03-2026 |
| | | JP WO2022176326 A1 | 25-08-2022 |
| | | KR 20230147610 A | 23-10-2023 |
| | | US 2024155407 A1 | 09-05-2024 |
| | | WO 2022176326 A1 | 25-08-2022 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63729506